(19) **Europäisches Patentamt / European Patent Office / Office européen des brevets**

(11) **EP 3 320 321 B1**

(12) **FASCICULE DE BREVET EUROPEEN**

(45) Date de publication et mention de la délivrance du brevet:
**10.04.2024 Bulletin 2024/15**

(21) Numéro de dépôt: **16763885.7**

(22) Date de dépôt: **11.07.2016**

(51) Classification Internationale des Brevets (IPC):
**G01N 1/40** $^{(2006.01)}$  **G01N 27/447** $^{(2006.01)}$
**G01N 30/00** $^{(2006.01)}$

(52) Classification Coopérative des Brevets (CPC):
**G01N 1/40; G01N 27/44743; G01N 27/44791; G01N 30/0005;** G01N 2001/4038; G01N 2030/004

(86) Numéro de dépôt international:
**PCT/FR2016/051774**

(87) Numéro de publication internationale:
**WO 2017/009566 (19.01.2017 Gazette 2017/03)**

(54) **SYSTÈME DE CONCENTRATION, PRÉCONCENTRATION PAR EMPILEMENT D'ÉCHANTILLON ET/OU PURIFICATION POUR ANALYSE**

SYSTEM ZUR KONZENTRATION UND VORKONZENTRATION DURCH PROBENSTAPELUNG UND/ODER -AUFREINIGUNG ZUR ANALYSE

SYSTEM FOR CONCENTRATION AND PRE-CONCENTRATION BY SAMPLE STACKING AND/OR PURIFICATION FOR ANALYSIS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.07.2015 FR 1556605**
**04.11.2015 FR 1560595**
**11.03.2016 FR 1652079**

(43) Date de publication de la demande:
**16.05.2018 Bulletin 2018/20**

(73) Titulaire: **Picometrics Technologie**
**31670 Labege (FR)**

(72) Inventeurs:
• **GINOT, Frédéric**
**31670 Labege (FR)**
• **ANDRIAMANAMPISOA, Comtet-Louis**
**31670 Labege (FR)**
• **PICOT, Vincent**
**31670 Labege (FR)**
• **BOUTONNET, Audrey**
**31670 Labege (FR)**
• **BANCAUD, Aurélien**
**31077 Toulouse (FR)**

(74) Mandataire: **Cornuejols, Georges**
**Cassiopi**
**230 Avenue de l'Aube Rouge**
**34170 Castelnau-le-Lez (FR)**

(56) Documents cités:
WO-A1-2009/005476    US-A1- 2005 034 990
US-A1- 2008 087 546    US-A1- 2009 071 828

**Description**

DOMAINE TECHNIQUE DE L'INVENTION

La présente invention vise un système de concentration, préconcentration par empilement d'échantillon (« stacking ») et/ou de purification pour analyse ou pour préparation d'échantillons chimiques ou biologiques. Elle s'applique, en particulier, à la concentration, à la préconcentration (« stacking ») et à la purification en ligne en amont d'instruments de préparation d'analyses ou d'instruments d'analyse, par exemple par électrophorèse capillaire.

ETAT DE LA TECHNIQUE

En chimie analytique, ou en analyse biologique in vitro, il est très fréquent de devoir concentrer et purifier un échantillon avant de l'analyser.

Ainsi, une analyse par électrophorèse capillaire nécessite des échantillons suffisamment purs et concentrés. L'électrophorèse capillaire est une technique analytique qui permet une haute efficacité de séparation sur les petites et grosses molécules. L'instrument d'électrophorèse capillaire est composé d'un capillaire de silice fondue avec fenêtre de détection, une source de haute tension, deux électrodes, deux réservoirs de tampon et un détecteur optique d'absorbance ou de fluorescence.

Après avoir rempli le capillaire de solution tampon, on injecte l'échantillon à l'entrée du capillaire. Une tension est appliquée aux bornes du capillaire. Les molécules sont alors séparées selon un flux électroosmotique et électrophorétique.

Pour augmenter la sensibilité de l'analyse, on utilise souvent une détection à fluorescence induite par laser (LIF) ou diode électroluminescente (LEDIF), dans laquelle l'analyte est marqué par un fluorochrome qui est détecté et/ou quantifié par fluorescence induite. Cette technique de détection est plus sensible et plus sélective que la détection classique par absorbance de lumière UV. En effet, seules les molécules qui fluorescent naturellement ou dérivées chimiquement sont détectées.

Une autre façon d'augmenter la sensibilité de l'analyse, avec ou sans détection de fluorescence induite par laser ou diode électroluminescente, est d'utiliser des techniques de pré-concentration en ligne, encore appelée « stacking ». La technique de la préconcentration par empilement d'échantillon (plus connue de l'homme du métier sous le terme anglais de « stacking » et ci-après désignée par « stacking ») la plus fréquemment utilisée (Field-Amplified Sample Stacking) est basée sur une différence de conductivité entre le tampon d'analyse et l'échantillon. Le fait de diluer l'échantillon dans l'eau avant injection plutôt que dans du tampon entraîne une accumulation frontale de l'échantillon et contribue à obtenir des pics plus hauts et plus fins, donc une meilleure sensibilité d'analyse et une meilleure résolution. D'autres techniques de pré-concentration en ligne existent pour l'électrophorèse capillaire. Elles nécessitent presque toutes de pouvoir maîtriser finement le contenu en ions de l'échantillon et du tampon d'analyse, ce qui peut obliger à devoir purifier préalablement l'échantillon.

Le document US 2008/0087546 expose une technique de concentration et de séparation en ligne d'analytes électriquement chargés. Cette technique repose sur une focalisation des molécules là où une force électrique et un flux hydrodynamique s'équilibrent dans un gradient de champ provoqué par une variation de section le long de l'axe d'écoulement. Dans cette technique, il faut que le gradient de champ électrique et le gradient de flux hydrodynamique soient différents pour que les molécules d'intérêt s'accumulent au point d'équilibre. Or, dans un canal formé de parois solides et isolantes, si l'on applique une pression et une tension aux deux extrémités du canal remplit d'un électrolyte, la vitesse du flux hydrodynamique et le champ électrique, donc la force électrique appliquée sur la molécule, varient tous les deux proportionnellement à l'inverse de la section du canal. Pour introduire une différence entre ces deux gradients de force, l'invention introduit une chambre d'électrodes séparée de la chambre de concentration/séparation par une membrane semi-perméable, qui permet, grâce au pilotage individuel d'électrodes, d'appliquer un gradient de champ électrique différent du gradient de flux hydrodynamique dans la chambre de concentration/séparation. Alternativement, les électrodes sont placées directement dans la chambre de concentration/séparation. Cette technique est élégante, mais elle complique considérablement la fabrication du dispositif et le problème d'évacuation des bulles formées aux électrodes lors de l'application du champ électrique.

Le document US 2005/0034990 décrit également une méthode de concentration d'analytes chargés par équilibre entre une force électrique motrice de l'analyte, et un contre-flux hydrodynamique, contre-flux lui-même induit indirectement par le champ électrique appliqué grâce au phénomène d'électroosmose. Le canal d'écoulement doit donc contenir au moins une paroi chargée de même signe que l'analyte pour provoquer cet écoulement. De façon à obtenir un gradient de flux hydrodynamique, le dispositif de concentration est constitué d'un canal d'écoulement passant d'une grande section à une petite section. L'analyte avance sous la force électrique dans le canal de grande section, mais est bloqué par l'écoulement hydrodynamique rapide sortant du canal de petite section. Le document ne décrit cependant pas de moyen clair pour faire varier différemment le gradient de flux hydrodynamique et le gradient de champ électrique selon la section de l'écoulement, comme expliqué plus haut. Le phénomène de concentration est donc instable, difficile à maîtriser et nécessite, pour des raisons physiques mal comprises, l'utilisation de très petits canaux, inférieurs à 5 $\mu$m, de préférence inférieurs à 1 $\mu$m.

Le document FR 3 024 544 propose également une méthode de concentration en ligne fondée sur un équilibre entre un entrainement hydrodynamique et une contre-force électrique. Cette méthode doit nécessairement prendre place dans un canal suffisamment fin pour que l'écoulement soit laminaire et avec un cisaillement significatif à l'échelle des molécules ou des particules à concentrer. De plus, le fluide porteur doit être viscoélastique. Les molécules à analyser se trouvent dans cet écoulement. Lorsqu'un champ électrique est appliqué qui génère une force opposée à la direction de l'écoulement, les molécules chargées électriquement subissent une contre-électrophorèse et se déplacent à une vitesse plus lente que celle du fluide qui les entoure. De ce fait, les molécules déforment l'écoulement à leur voisinage. A cause du cisaillement non négligeable à l'échelle des macromolécules et à cause des propriétés viscoélastiques du fluide, l'écoulement exerce une contre-réaction sur les molécules, perpendiculaire à l'écoulement, qui repousse les molécules vers les parois. L'intensité de la force dépend de la nature du fluide, du taux de cisaillement, de la taille de la molécule et de l'intensité de la force d'électrophorèse et donc du champ électrique appliqué. Dans un canal de section constante, les molécules se répartissent donc le long d'un axe transverse à l'écoulement, selon leur taille. Dans un flux laminaire, la vitesse de l'écoulement dépend de la position. Les molécules sont donc poussées par l'écoulement à des vitesses différentes et sont donc séparées selon leur taille. Cette technique de séparation a été appliquée notamment à la séparation de fragments d'ADN.

En choisissant la géométrie de l'écoulement laminaire, on peut créer par ailleurs des conditions où les molécules d'intérêt sont arrêtées en un point précis du dispositif, alors même que l'écoulement de l'échantillon est toujours présent. On peut ainsi concentrer en ligne ces molécules pour ensuite les analyser ou les purifier. L'analyse se fait ainsi avec une très haute sensibilité du fait de la concentration réalisée par le dispositif.

Par exemple, pour un canal présentant un cône d'entrée, formant un goulet d'étranglement, avec une réduction linéaire de la plus grande dimension de la section perpendiculaire à la direction d'écoulement, la restriction progressive génère une accélération du fluide et donc du cisaillement, ainsi qu'une augmentation du champ électrique opposé à l'écoulement. Il y a donc, dans le sens où la section du canal décroît, un accroissement de la force transverse au fur et à mesure de l'avancée vers la restriction. Quand les molécules se trouvent à une distance de la paroi telle que leur vitesse liée à l'écoulement est égale à leur vitesse d'électrophorèse en direction contraire, les molécules s'arrêtent, alors même que l'écoulement est toujours présent. Il y a donc accumulation des molécules à cet endroit, et donc concentration. On note que le mouvement brownien provoque une répartition aléatoire dans le profil parabolique de l'écoulement. La force transverse d'origine viscoélastique modifie le barycentre du nuage de points, en tassant les molécules vers la paroi.

On note que cette méthode permet non seulement de concentrer les molécules, mais aussi éventuellement de les séparer. La séparation dépend de la géométrie de restriction de chaque canal : un cône long, avec un angle faible, répartit les molécules selon leur taille sur une plus grande longueur qu'un cône court présentant un angle élevé.

On note aussi que cette méthode constitue aussi un filtre passe-bas : toutes les molécules en dessous d'une certaine taille ou d'une certaine charge passent librement dans les canaux.

Mais comme dit ci-dessus, cette méthode a nécessairement lieu dans un canal d'assez petite dimension, ce qui limite le volume d'échantillon que l'on peut traiter. De plus, le pouvoir séparateur de cette méthode est médiocre, car il est limité par la longueur sur laquelle a lieu la restriction de section du canal.

Les techniques d'augmentation de la sensibilité de l'analyse de l'état de l'art ne sont pas toujours suffisantes pour éviter de devoir concentrer l'échantillon au préalable d'une analyse. Le chimiste ou le biologiste doit alors concentrer l'échantillon en amont de l'analyse, souvent manuellement. Ainsi, en biologie moléculaire, ou en immunologie, il existe de nombreux kits manuels permettant de purifier et de concentrer son échantillon avant analyse. Ces étapes off-line de purification et de concentration sont longues et fastidieuses, parfois coûteuses, et comportent un risque de perdre ou de détériorer l'échantillon au cours des opérations.

Cette problématique de pureté des échantillons et de leur concentration est une problématique générale de l'analyse en chimie ou en biologie. Elle est présente pour toutes les analyses, comme l'électrophorèse en gel, les chromatographies, les analyses optiques (spectrales, chirales, de fluorescence, d'absorption, de turbidité,...), les spectrométries de masse, les tests homogènes de binding comme les immunoanalyses, les tests électrochimiques, le séquençage de l'ADN, etc. Quelles que soient les analyses, il est souvent intéressant de disposer d'une méthode de préconcentration en ligne des échantillons, qui fonctionne même avec des échantillons non ou faiblement purifiés. Dans le cas contraire, l'opérateur doit mettre en oeuvre des méthodes de purification et/ou de concentration en amont de l'analyse, avec les inconvénients déjà cités ci-dessus dans le cas de l'électrophorèse capillaire.

La pureté et la concentration des produits biochimiques ou biologiques est aussi une problématique que l'on rencontre en bio-production de produits actifs pour la santé. Dans ce type de production, on part d'un grand volume de produit, par exemple un volume de cellules, contenant le produit d'intérêt, suspendues dans leur milieu de culture, et on veut obtenir en fin de processus le produit thérapeutique extrêmement pur dans un volume typiquement 100 à 1000 fois plus faible que le volume de départ. Le processus est composé en général de plusieurs étapes, qui dépendent du produit thérapeutique à purifier. Très souvent, les premières étapes comportent une ou plusieurs chromatographies qui permettent à la fois de purifier et de concentrer en partie le produit. Très souvent aussi, la dernière étape est une ultra-filtration pour concentrer le produit purifié. Dans ces procédés, le rendement et la vitesse de chaque étape sont des critères clés de pilotage pour le développement du processus industriel. Multiplier les étapes permet souvent d'obtenir de très bonnes puretés de produit, mais augmente les coûts directs et indirects de production, d'autant plus que cette multiplication d'étapes diminue les rendements. Il est donc avantageux de disposer de procédés permettant à la fois de purifier et de concentrer dans un temps court, donc avec un fort débit.

Il faut aussi noter ici que le compromis entre longueur du système de séparation et pouvoir séparateur de la technique séparative est un problème récurrent dans le domaine de la chimie analytique, surtout à l'échelle préparative qui demande à traiter de grands volumes d'échantillons. En chimie analytique, ou en analyse biologique in vitro, les techniques séparatives les plus utilisées sont les techniques d'électrophorèse et les techniques de chromatographie.

Dans les techniques d'électrophorèse, les molécules ou particules chargées de l'échantillon, qui sont en solution ou en suspension dans un milieu aqueux, sont placées dans un champ électrique. Elles migrent alors sous la force induite par le champ électrique, à une vitesse qui dépend à la fois de leur charge et de leur taille. Au bout d'un certain temps de migration, et donc d'une certaine distance de migration, les molécules sont séparées et peuvent être détectées de façon bien distincte.

Pour les analytes, molécules ou particules, d'une taille élevée par rapport à la longueur de Debye, qui est l'épaisseur de la couche ionique entourant l'analyte chargé pour assurer l'électroneutralité de la solution, c'est uniquement la densité de charge qui conditionne la vitesse de migration des analytes en solution libre. Pour pouvoir séparer des molécules de même nature chimique, donc de même densité de charge, mais de taille différente, il faut introduire une matrice, en général sous la forme d'un gel d'un polymère hydrophile neutre, qui sert de tamis moléculaire. C'est ainsi que l'on peut séparer des molécules d'ADN de différente taille, ou des protéines. Là encore, la séparation a lieu après un certain temps et une certaine de distance de migration.

On comprend bien que, dans ces techniques, il y a un compromis à trouver entre temps de migration, distance de migration, et résolution de la séparation entre les différents analytes de l'échantillon. Pour diminuer la taille des instruments et les temps d'analyse, on peut miniaturiser les électrophorèses. Cependant, cette miniaturisation n'est pas possible quand on veut isoler par électrophorèse une grande quantité d'analyte. Dans ce cas, le biochimiste est contraint d'utiliser des systèmes encombrants et lents. Il existe d'ailleurs peu de systèmes préparatifs basés sur l'électrophorèse, et ceux qui existent sont des systèmes limités à une échelle de laboratoire ; il n'y a pas de préparation de molécules par électrophorèse à une échelle réellement industrielle.

Les techniques de chromatographie sont nombreuses, qui reposent sur des principes de séparation différents.

La chromatographie par exclusion de taille repose, comme l'électrophorèse, sur une différence de vitesse de migration des molécules, ou particules, dans une colonne remplie de particules immobiles et poreuses, appelées le support de chromatographie ; les analytes les plus gros, d'une taille supérieure aux pores du support, emportés par le flux, progressent sans pouvoir entrer dans les particules du support, dans le volume mort de la colonne. En revanche, les analytes plus petits entrent dans les particules du support, et y suivent des chemins plus tortueux que les gros analytes, avec un flux hydrodynamique plus lent. Ils migrent donc moins vite le long de la colonne. Un détecteur placé en aval de la colonne voit donc passer d'abord les grands analytes, puis les petits. Il existe de nombreux détecteurs différents : absorption de lumière, UV ou visible, diffusion de lumière, indice de réfraction, fluorescence, conductivité, ..., voire spectrométrie de masse.

Dans la chromatographie d'exclusion de taille, on retrouve les inconvénients de longueur de migration et de temps d'analyse déjà cités pour les techniques d'électrophorèse. Un autre inconvénient de la méthode est qu'il faut trouver un support de chromatographie inerte, qui n'ait aucune interaction moléculaire avec les analytes de l'échantillon, ce qui n'est pas toujours possible. Enfin, les impuretés solides de l'échantillon doivent être d'une taille très inférieure au diamètre des particules du support de chromatographie, pour éviter le colmatage. Or il est intéressant de diminuer au maximum la taille de ces supports, pour améliorer le rendement de la colonne, et diminuer sa longueur et son volume. Il existe néanmoins des installations industrielles basées sur cette chromatographie, par exemple pour la purification d'anticorps thérapeutique dans l'industrie pharmaceutique.

Les techniques de chromatographie par échange d'ion, ou en phase inverse, reposent sur une différence d'adsorption des analytes sur le support de chromatographie. Les molécules, ou particules, de l'échantillon sont mises dans une solution qui provoquent leur adsorption sur les particules du support de chromatographie ; cette adsorption est d'origine électrostatique dans les chromatographies par échange d'ions, et d'origine hydrophobe dans les chromatographies en phase inverse. Une fois les analytes entièrement adsorbés dans la colonne de chromatographie, on applique en général un gradient temporel de solvant d'élution qui va détacher de façon différentielle les analytes ; les analytes les plus faiblement accrochés au support vont se détacher en premier, et sortiront en premier de la colonne de chromatographie. Le gradient appliqué est un gradient de polarité du solvant pour les phases inverses, et un gradient de pH ou de sels pour les échanges d'ion.

Dans ces techniques, on retrouve indirectement le compromis à trouver entre longueur de la colonne, temps d'analyse, et résolution. Pour maximaliser la résolution, il faut que, lors de l'application du gradient, l'entrée et la sortie de la colonne soient dans des conditions d'élution similaires ; autrement, les molécules à l'entrée de la colonne se détachent avant celles situées à la sortie, ce qui réduit le pouvoir de séparation de la colonne de chromatographie. Il faut donc soit un gradient lent, soit une colonne courte. Mais si la colonne est courte, la quantité de support peut ne pas être suffisante pour adsorber la totalité des analytes de l'échantillon. Aussi, plus la colonne est courte, et plus le débit de l'échantillon lors de l'adsorption doit être lent, de façon à ce que les analytes aient le temps de s'adsorber sur le support. Ces techniques de chromatographie ont aussi les mêmes inconvénients de colmatage que la technique de chromatographie par exclusion de taille, et la même difficulté à trouver des supports sur lesquels les analytes ne s'adsorbent que par un seul mécanisme d'interaction moléculaire.

On connait les demandes de brevet US 2009/071 828 A1 et WO 2009/005 476 A1 qui divulguent un procédé et un dispositif micro fluidique de filtration de particules dans lequel un courant électrique constant est appliqué être deux électrodes.

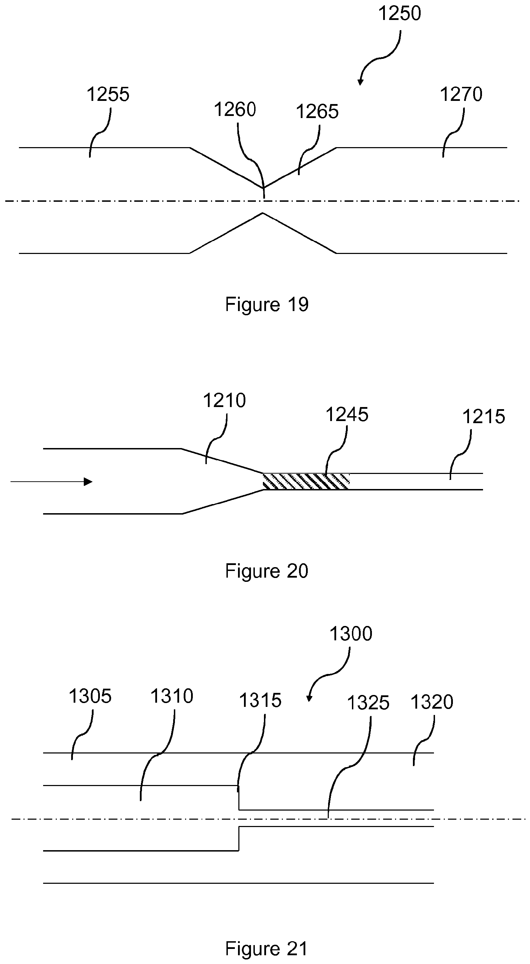

On connait la demande de brevet US2008/087546 A1 qui divulgue un dispositif comportant une chambre de séparation dans laquelle un champ électrique modulable est appliqué. Pour moduler le champ électrique, les électrodes sont positionnées sous la chambre de séparation, ou en matrice dans la chambre de séparation, comme illustré en figure 20. Ce positionnement des électrodes est ainsi indispensable pour faire varier le champ électrique indépendamment de la section du dispositif décrit dans ce document et obtenir la séparation des molécules ou particules d'intérêt.

OBJET DE L'INVENTION

La présente invention vise à remédier à tout ou partie de ces inconvénients.

A cet effet, la présente invention vise un système de séparation de molécules ou de particules, pour analyse ou pour préparation d'échantillons chimiques ou biologiques. Elle se situe dans le domaine des sciences séparatives, que ce soit à des fins d'analyse, à des fins de préparation d'échantillons, ou à des fins de production industrielle de molécules ou particules.

Le système objet de la présente invention vise à s'affranchir de la problématique de compromis entre longueur du dispositif de séparation et temps d'analyse, et d'accepter des impuretés solides dans l'échantillon bien supérieures à quelques micromètres. Il est ainsi possible d'obtenir des séparations rapides, avec un dispositif compact, à l'échelle analytique comme à l'échelle préparative, pour un échantillon contenant des débris, par exemple des débris cellulaires.

Selon un premier aspect, la présente invention vise un système de traitement de molécules ou particules d'intérêt véhiculées par un liquide viscoélastique selon la revendication 1

Grâce à ces dispositions, les molécules ou particules d'intérêt sont, d'abord, concentrées dans la zone de concentration, puis transférées, après la phase de concentration : une partie des molécules ou particules d'intérêt retenues dans la zone de concentration restent retenues pendant qu'une autre partie est transférée à un instrument de préparation d'analyse ou d'analyse, ou simplement vers un détecteur de l'état de l'art. Les molécules ou particules d'intérêts sont ainsi séparées selon leurs types, charge ou taille.

Dans des modes de réalisation, la zone de concentration comporte un canal d'entrée et au moins un canal de sortie, le cisaillement moyen présent dans chaque canal de sortie étant au moins le double du cisaillement moyen présent dans le canal d'arrivée.

Grâce à ces dispositions, les particules ou molécules de l'échantillon se concentrent dans la zone de concentration en amont des canaux parallèles, avec éventuellement, une séparation selon la taille et la charge électrique, le long de lignes d'isocisaillement (c'est-à-dire de cisaillements égaux).

Dans des modes de réalisation, le moyen de modulation est configuré pour commander le moyen d'application du champ électrique pour appliquer un champ électrique décroissant dans le temps. Ainsi, les molécules retenues dans la zone de concentration pendant la phase de concentration sont continûment séparées selon leurs types, charge ou taille.

Dans des modes de réalisation, le système comporte, de plus, un moyen de modulation de la pression pour appliquer, après la phase de concentration une pression différente de la pression appliquée pendant la phase de concentration.

Dans des modes de réalisation, le moyen de modulation de la pression est configuré pour appliquer, après la phase de concentration, une pression supérieure à la pression appliquée pendant la phase de concentration.

On obtient ainsi une séparation plus rapide.

Dans des modes de réalisation, la zone de concentration comporte un diaphragme ouvert perpendiculaire à l'axe central d'écoulement du fluide viscoélastique dans la zone de concentration.

Ces modes de réalisation sont faciles à réaliser, par exemple par collage de deux capillaires présentant des voies ou canaux de différents diamètres.

Dans des modes de réalisation, la zone de concentration comporte une multitude de lumières ou capillaires parallèles à l'axe central d'écoulement du fluide viscoélastique dans la zone de concentration.

Ces modes de réalisation ont l'intérêt de présenter un débit plus élevé. Ils peuvent être mis en oeuvre avec des échantillons plus volumineux.

Dans des modes de réalisation, la zone de concentration comporte un angle, l'axe central d'écoulement du fluide viscoélastique suivant ledit angle lors de la traversée de la zone de concentration.

Dans des modes de réalisation, le système objet de la présente invention comporte une vanne pour orienter le fluide viscoélastique sortant de la zone de concentration au choix dans deux directions, l'une des dites directions menant à un instrument et/ou un collecteur de fraction.

Ces modes de réalisation permettent de rejeter les molécules et particules sans intérêt et donc de purifier l'échantillon.

Pour mettre en oeuvre l'invention, est également décrit, un procédé de traitement de molécules ou particules d'intérêt véhiculées par un liquide viscoélastique, procédé qui comporte :

- une étape de mise en écoulement laminaire, pendant au moins une partie dite « phase de concentration », de la durée de fonctionnement du système, du liquide viscoélastique dans un dispositif de concentration, stacking et/ou de purification ledit dispositif comportant une zone de concentration présentant, dans le sens dudit écoulement, une surface de section en entrée supérieure à la surface de section de chaque canal en sortie,
- au moins pendant la phase de concentration, une étape d'application d'un champ électrique entre l'entrée et la sortie de la zone de concentration, l'action du champ électrique sur les molécules ou particules d'intérêt étant, dans la zone de concentration, opposée au sens dudit écoulement et provoquant la retenue de molécules ou particules d'intérêt au moins dans la zone de concentration et
- une étape de modulation du champ électrique pour appliquer, après la phase de concentration, un champ électrique d'intensité non nulle et inférieure à l'intensité du champ électrique appliqué pendant la phase de concentration.

Les avantages, buts et caractéristiques particulières de ce procédé étant similaires à ceux du système objet de la présente invention, ils ne sont pas rappelés ici.

Selon l'invention, le système de traitement de molécules ou particules d'intérêt véhiculées par un liquide viscoélastique, système qui comporte :

- un moyen de mise en écoulement laminaire, pendant au moins une partie, dite « phase de concentration », de la durée de fonctionnement du système, du liquide dans un dispositif de concentration, préconcentration par empilement d'échantillon (stacking) et/ou de purification, ledit dispositif comportant une zone de concentration présentant, dans le sens dudit écoulement, un canal d'arrivée et une pluralité de canaux de sortie et
- un moyen d'application d'un champ électrique entre l'entrée et la sortie de la zone de concentration pendant la phase de concentration, l'action du champ électrique sur les molécules ou particules d'intérêt étant, dans la zone de concentration, opposée au sens dudit écoulement et provoquant la retenue de molécules ou particules d'intérêt au moins dans la zone de concentration.

Grâce à ces dispositions, on augmente la section du canal d'arrivée et le nombre de cols de la zone de concentration, ce qui permet d'accroître le phénomène de concentration et le volume de l'échantillon traité, par rapport à ce qui est décrit en FR 3 024 544. Ainsi, les systèmes de traitement objets de la présente invention, qui comportent une pluralité de canaux, se prêtent facilement à un changement d'échelle, pour passer d'un capillaire à une canalisation ou tuyau millimétrique, voire à des conduites plus grosses. On obtient alors un dispositif d'ultrafiltration avec des pores de microfiltration, donc avec des débits potentiellement plus élevés et moins de colmatage. Des calculs simples montrent qu'une plaque de cinq mm d'épaisseur percée de trous de 7,5 $\mu$m de diamètre au pas carré de 20 $\mu$m présenterait un débit sous 1 bar de 2500 L/heure.m$^2$, performance bien supérieure aux membranes d'ultrafiltration utilisées dans les laboratoires. De tels dispositifs devraient donc trouver des applications dans les procédés avals de purification/concentration en bioproduction (« DownStream Processes »).

Les systèmes de traitement objets de la présente invention peuvent fournir des systèmes de concentration et de purification, notamment à l'échelle du laboratoire, par exemple pour la purification d'anticorps, de nanoparticules, ou d'acides nucléiques, où l'opérateur manie de l'ordre du microgramme de produit.

On note que, dans la méthode divulguée en FR 3 024 544, le dispositif mono-canal décrit comprend une restriction progressive de la section du canal, de sorte qu'il peut y avoir une séparation des molécules ou des analytes à concentrer le long de la restriction de section. Mais il est aussi possible d'arrêter les molécules ou les particules d'intérêt avec de simples canaux droits. Pour cela, on fixe des conditions d'écoulement et de champ électrique telles que les molécules, dans les canaux de sortie de la zone de concentration, sont plaquées si proches de la paroi que la force d'électrophorèse est plus forte que l'entraînement par l'écoulement. Dans ce cas, les molécules présentes dans le canal remontent l'écoulement le long de la paroi. Si l'écoulement présente un profil de Poiseuille jusqu'à l'entrée du canal, les molécules sortent du canal, et se concentrent en amont des canaux, dans la zone de concentration de plus grande section. Si l'écoulement présente des perturbations du profil de Poiseuille à l'entrée du canal, les molécules se concentrent dans cette zone de perturbation à l'entrée du canal.

La mise en oeuvre du système concentre les molécules ou particules de grandes tailles et charges électriques et laisse passer les molécules ou particules plus petites ou moins chargées. Cette caractéristique est mise à profit pour purifier et concentrer un échantillon avant analyse.

Cette technique de concentration en ligne s'adapte à tout type de nano-objets ou de micro-objets, tels que :

- des fragments d'ADN,
- d'autres macromolécules, comme des protéines ou des glucides,
- des complexes, qui peuvent comprendre beaucoup de petites molécules, comme des polluants, des stéroïdes, ...
- des nanoparticules, notamment celles utilisées comme vecteur de délivrance de médicaments par l'industrie pharmaceutique,
- des particules virales ou bactériennes.

On note que l'on peut réaliser la plaque dotée de la pluralité de canaux par usinage laser, par DRIE (acronyme de Deep Reactive Ion Etching) ou une autre méthode d'usinage de micro-précision, pour obtenir des perçages dont le diamètre est de l'ordre de quelques microns à quelques dizaines de microns.

Dans des modes de réalisation, les canaux de sortie sont dimensionnés de telle sorte que le cisaillement moyen dans ces canaux est strictement supérieur au cisaillement moyen présent dans le canal d'arrivée dudit dispositif.

Typiquement, le rapport de cisaillement moyen entre le canal d'arrivée et chacun des canaux de sortie de la zone de concentration doit être inférieur à 0,01.

Dans des modes de réalisation, le système objet de la présente invention comporte un multi-capillaire présentant des canaux linéaires, la zone de concentration se trouvant d'un côté de ce multi-capillaire. On rappelle qu'un multi-capillaire est un capillaire présentant plusieurs canaux, ou voies. Pour l'insérer dans le dispositif, on peut le couper et le coller entre le canal d'arrivée et la conduite de sortie.

Ces modes de réalisation peuvent, par exemple, être réalisés par manchonnage ou collage ou soudage de leurs constituants. On évite ainsi un usinage coûteux et on peut avoir des canaux ou voies de toutes longueurs souhaitées. Des multi-capillaires existent comme fibres optiques à cristaux photoniques. On peut également fabriquer des multi-capillaires par assemblage d'un faisceau de capillaires individuels, et en remplissant les interstices entre capillaires à l'aide d'une résine.

Dans des modes de réalisation, la zone de concentration comporte une pluralité de cônes formés dans un diaphragme perpendiculaire à l'axe central d'écoulement du fluide en sortie de la zone de concentration.

En usinage laser d'une plaque de silice, on obtient plus facilement une telle disposition à cônes parallèles plutôt qu'une disposition à cylindres parallèles.

Dans des modes de réalisation, le moyen d'application du champ électrique est configuré pour appliquer une décroissance progressive du champ électrique après la phase de concentration, pour séparer les molécules concentrées au préalable.

Est également décrit, un kit pour le fonctionnement du système objet de la présente invention, qui comporte le liquide viscoélastique.

Est également décrit, un kit pour le fonctionnement du système objet de la présente invention, qui comporte le dispositif de concentration, préconcentration par empilement d'échantillon (stacking) et/ou de purification, ledit dispositif comportant une zone de concentration présentant, dans un sens d'écoulement, une pluralité de canaux de sortie.

Dans des modes de réalisation du kit , les canaux de la pluralité de canaux de sortie sont dimensionnés de telle sorte que le cisaillement moyen dans ces canaux est très supérieur (au moins double) au cisaillement moyen présent dans le canal d'arrivée dudit dispositif.

Ces kits peuvent être combinés en un seul kit. On note que l'un ou l'autre de ces kits peut comporter, de plus :

- d'autres réactifs, selon l'application visée par exemple un échantillon de contrôle pour vérifier le bon fonctionnement,
- un standard de poids moléculaire,
- un standard de masse et/ou
- un loading buffer à ajouter dans l'échantillon.

Les avantages, buts et caractéristiques particulières de ces kits étant similaires à ceux du système objet de la présente invention, ils ne sont pas rappelés ici.

BREVE DESCRIPTION DES FIGURES

D'autres avantages, buts et caractéristiques particulières de l'invention ressortiront de la description non limitative qui suit d'au moins un mode de réalisation particulier des dispositifs et du procédé objets de la présente invention, en regard des dessins annexés, dans lesquels :

- les figures 1, 2 et 3 représentent, schématiquement et en coupe, des modes de réalisation particuliers d'un dispositif de concentration pour le système objet de la présente invention,
- la figure 4 représente, schématiquement et en coupe, un mode de réalisation particulier d'un dispositif de concentration pour le système objet de la présente invention,
- la figure 5 représente un mode de réalisation particulier du système objet de la présente invention,
- les figures 6 et 7 représentent, en vue en coupe axiale et en vue longitudinale, respectivement, un multicapillaire,
- la figure 8 représente une variante du dispositif illustré en figure 3,
- la figure 9 représente schématiquement un dispositif monocapillaire de concentration,
- la figure 10 représente schématiquement un dispositif multi-capillaires, mode de réalisation de l'invention,
- la figure 11 est une photographie du dispositif multi-capillaire de concentration schématisé en figure 10,
- la figure 12 est une image faite au microscope électronique à balayage du multicapillaire illustré en figures 10 et 11,
- la figure 13 est un couple de photographies réalisées durant la concentration, en début et en fin de concentration,
- la figure 14 représente des courbes d'évolution de l'intensité de fluorescence durant la concentration,
- la figure 15 représente, schématiquement et en coupe, un premier mode de réalisation particulier du système objet de la présente invention,
- les figures 16A à 16E représentent, en coupe, une partie du système illustré en figure 15 au cours de cinq phases de fonctionnement de ce système,
- la figure 17 représente des courbes de couplage montrant l'influence du champ électrique sur la vitesse de fragments d'ADN,
- les figures 18A à 18E représentent, en coupe, une partie de l'un des systèmes illustrés en figures 15 à 16E, au cours d'une succession d'étapes de séparation de molécules ou particules d'intérêt,
- les figures 19 à 22 représentent, schématiquement et en coupe, des modes de réalisation particuliers d'un dispositif de concentration pour le système objet de la présente invention,
- la figure 23 représente, schématiquement et en coupe, une vanne pour le système objet de la présente invention,
- la figure 24 représente, sous forme d'un logigramme, des étapes d'un mode de réalisation particulier d'un procédé et
- les figures 25 et 26 montrent, sous forme de tracés de migration d'ADN, les effets de la mise en oeuvre de la présente invention.

## DESCRIPTION D'EXEMPLES DE REALISATION DE L'INVENTION

On note, dès à présent, que les figures ne sont pas à l'échelle.

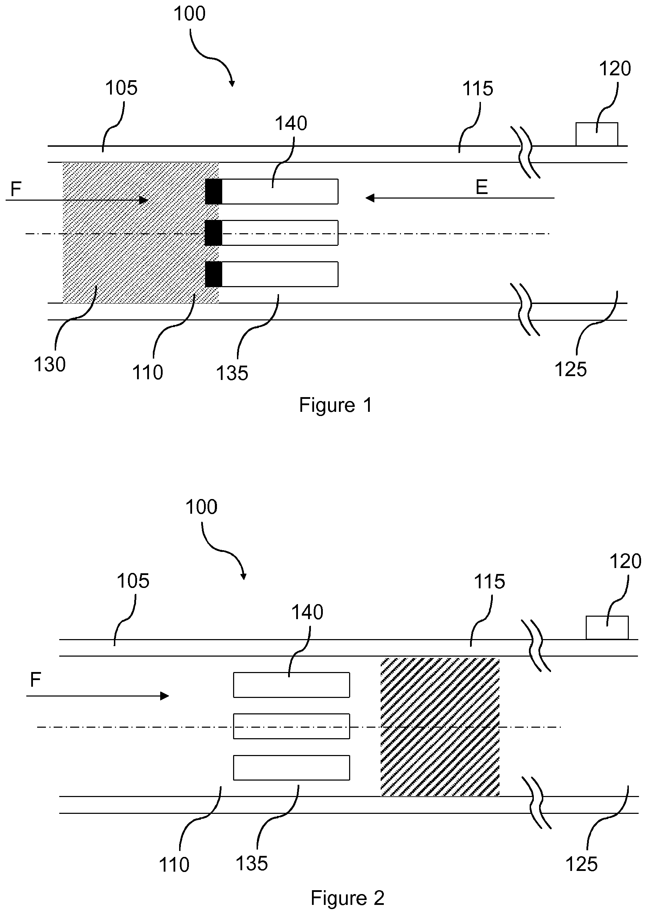

Dans les modes de réalisation illustrés en regard des figures 1 à 4 et 6 à 14, on utilise une pluralité de canaux dans lesquels s'écoule un fluide viscoélastique grâce à l'application d'une différence de pression entre les deux extrémités des canaux.

On observe, en figure 1, une partie 100 d'un premier mode de réalisation du dispositif de concentration, stacking et/ou de purification pour analyse. Cette partie 100 comporte un canal d'arrivée 105, une zone de concentration 110 en entrée de canaux de sortie parallèles 135 et une conduite de sortie 115.

Comme illustré en figure 1, pour mettre en oeuvre le premier mode de réalisation du dispositif, on réalise, d'abord, une injection hydrodynamique ou électrocinétique d'un échantillon 130, selon des méthodes classiques en électrophorèse capillaire ou en chromatographie. On note cependant que, du fait du diamètre du canal d'arrivée 105, qui peut être grand, on peut injecter ici un volume beaucoup plus important qu'en électrophorèse capillaire classique, par exemple entre 0,01 et 10 ml pour une échelle de préparation d'échantillons de laboratoire, voire un à plusieurs litres pour une échelle pilote ou industrielle. Le canal d'arrivée 105, la zone de concentration 110 et la conduite de sortie 115 ont été remplis au préalable du fluide viscoélastique. Préférentiellement, l'échantillon 130 a également été dilué dans ce fluide viscoélastique.

Comme illustré en figure 1, après l'injection, l'entrée du canal d'arrivée 105 étant mise en communication avec un flacon (non représenté) contenant le fluide ou tampon viscoélastique, on applique un différentiel de pression et un différentiel de tension électrique entre l'entrée du canal d'arrivée 105 et la sortie 125 de la conduite de sortie 115. L'action du champ électrique E est opposée au flux F de tampon viscoélastique, la direction du champ électrique E dépendant du signe de la charge de la molécule/particule à concentrer. Comme expliqué ci-dessus, les particules ou molécules de l'échantillon 130 se concentrent dans la zone de concentration 110 en amont des canaux parallèles, avec éventuellement, une séparation selon la taille et la charge électrique, le long de lignes d'isocisaillement (c'est-à-dire de cisaillements égaux).

Une fois que tout l'échantillon 130 est passé dans la zone de concentration 110, il y reste les particules ou molécules concentrées et éventuellement séparées. On effectue alors un lavage en faisant passer un excès de fluide viscoélastique. Ainsi, les molécules ou particules non retenues dans la zone de concentration 110 sont entraînées hors du dispositif de concentration, par la conduite de sortie 115 et ne gênent donc pas la détection ultérieure des molécules ou particules d'intérêt. Cela permet aussi de purifier les molécules ou particules d'intérêt avant de les collecter en aval du dispositif de concentration.

On fait alors migrer les molécules concentrées par simple pression, avec un champ électrique nul, comme illustré en figure 2. On transfère ainsi le concentrât de la zone de concentration à la conduite de sortie 115.

On note qu'il n'y a pas de stacking lors de ce transfert : c'est l'étape de concentration qui a joué le rôle de stacking, qui fait que le plug de molécules ou particules concentrées a un volume en sortie de la zone de concentration 110 qui est indépendant du volume initial de l'échantillon.

Alternativement, on peut faire migrer les molécules concentrées par électrophorèse. Dans ce cas, on arrête l'écoulement, et on applique un champ électrique emmenant les molécules vers la sortie du dispositif 100.

Dans un premier mode d'utilisation du dispositif, on veut récupérer l'ensemble des molécules ou particules qui ont été concentrées. Il suffit alors de collecter l'échantillon en aval du dispositif, selon les méthodes de l'état de l'art, par exemple en utilisant un collecteur de fraction, ou une vanne adéquate.

Dans un second mode d'utilisation du dispositif, on veut récupérer seulement une partie des molécules ou particules qui ont été concentrées. Par exemple, on est intéressé par récupérer une taille d'acides nucléiques donnée, en éliminant les fragments plus courts et les fragments plus longs que cette taille. Il peut en être de même pour des protéines, des particules, des cellules,...

Dans ce second mode d'utilisation, on réalise une phase de séparation entre la phase de concentration et la phase de collecte.

La séparation peut avoir lieu par électrophorèse simple, dans la conduite de sortie 115. Dans ce cas, on choisit un polymère neutre pour rendre le liquide viscoélastique, de telle sorte que le fluide viscoélastique constitue aussi une matrice de séparation par électrophorèse des molécules ou particules d'intérêt.

La séparation peut aussi avoir lieu comme exposée ci-dessus et dans la demande de brevet FR 2 994 103 ; dans ce mode de réalisation, les canaux de sortie 135 de la zone de concentration 110 sont allongés au-delà de ce qui est nécessaire pour la seule phase de concentration, et peuvent d'ailleurs se substituer à la conduite de sortie 115. On applique alors des pressions et tension en sens opposés, et les particules ou molécules se séparent selon une distribution. Elles passent éventuellement devant le détecteur 120 optionnel, pour y être détectées et analysées. La collecte des molécules ou particules d'intérêt a alors lieu en sortie du multi-capillaire 135, éventuellement prolongé par une conduite de sortie 115, par les moyens de l'état de l'art, par exemple à l'aide d'un collecteur de fraction ou d'une vanne adéquate. Le détecteur 120 peut avantageusement être utilisé pour piloter la fonction de collecte des molécules ou particules d'intérêt, par exemple pour commander le démarrage et la fin de la collecte en fonction des temps de migration mesurées.

Dans des modes privilégiés de réalisation, on réalise la séparation en configurant le moyen d'application du champ électrique pour faire appliquer une décroissance progressive du champ électrique E après la phase de concentration, pour séparer les molécules.

La séparation a ainsi lieu en diminuant progressivement, ou par paliers, le champ électrique E appliqué pendant la concentration. On note en effet que si, après la phase de concentration, on réduit progressivement l'intensité du champ électrique E, par exemple selon une fonction linéaire décroissante, cela a pour effet de faire passer les molécules ou particules d'intérêt dans les canaux 135 définissant la zone de concentration 110, puis dans la conduite de sortie 115 et le détecteur 120 (s'il existe), successivement en fonction de leurs tailles et charges électriques.

On réalise ainsi une séparation ordonnée des molécules ou particules d'intérêt qui passent devant le détecteur optionnel 120, et qui peuvent être collectées par les moyens de l'état de l'art.

On note que l'on a intérêt à mettre le détecteur 120 et les moyens de collecte le plus près possible de la zone de concentration 110, pour réduire au maximum les effets de diffusions axiale, brownienne ou liée au profil parabolique de l'écoulement laminaire, qui risquent de re-mélanger les molécules et particules d'intérêt de différentes charges et tailles.

On note que, selon cette invention, on peut ajuster la séparation entre deux pics de détection de molécules ou particules en modulant la vitesse de diminution de l'intensité du champ électrique E. On peut, par exemple, réaliser des paliers, ce qui conduit à la formation de paliers de tailles et charges des molécules et particules passant devant le détecteur 120 et étant collectées.

L'invention présente des avantages complémentaires :

- il n'est pas nécessaire de prévoir un long canal de séparation et conduite de sortie 115 ; les dimensions du dispositif sont donc réduites ;
- le problème de pollution éventuelle de la conduite de sortie 115 par les impuretés non concentrées étant proportionnel à la longueur de cette conduite de sortie 115, il est grandement résolu par la très petite longueur de cette conduite de sortie 115.

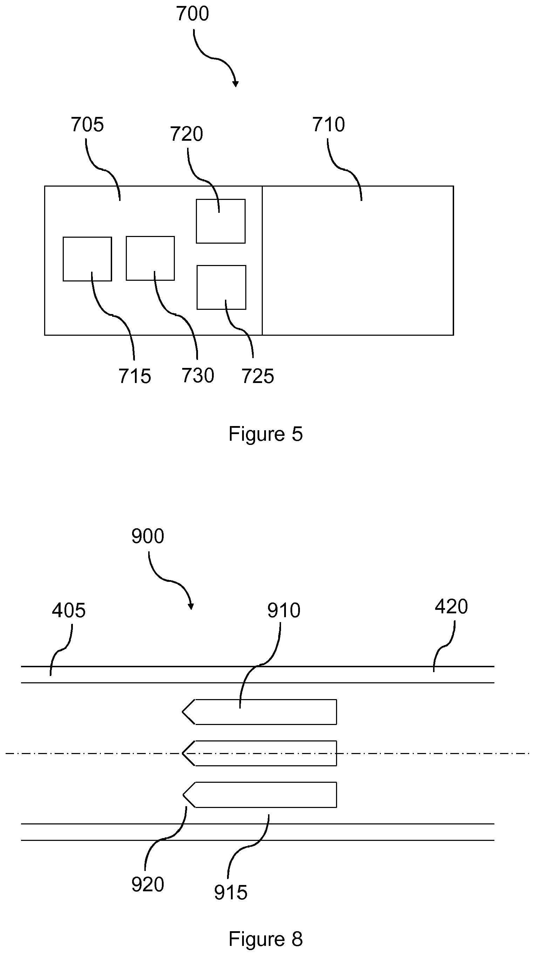

On note que l'ensemble de ces modes d'utilisation et de réalisation du dispositif peut être réalisé avec une zone de concentration 110 comportant une pluralité de cônes (voir figure 8) formés dans un diaphragme perpendiculaire à l'axe central d'écoulement du fluide en sortie de la zone de concentration 110. L'angle formé par les parois d'entrée des canaux avec l'axe commun aux canaux a un effet sur la concentration. Un angle important, donnant un cône court, génère des gradients de force abrupts et une zone de concentration 110 ramassée. Au contraire, un angle faible, correspondant à un cône allongé, génère des gradients de force plus faibles et une zone de concentration 110 plus étendue.

Un avantage des modes de réalisation dans lesquels les canaux 135 présentent des cônes d'entrée, notamment par rapport aux modes de réalisation dans lesquels les canaux 135 débouchent perpendiculairement à la paroi, tient en ce que le dispositif de concentration opère en même temps un certain degré de séparation parmi les molécules ou particules concentrées. Les molécules ou particules les plus petites ou les moins chargées se trouvent les plus proches du col des cônes de la zone de concentration 110. Lors de l'éventuelle étape de séparation et de détection, elles restent devant les molécules ou particules plus lentes et n'ont donc pas besoin de les doubler.

Ainsi, on peut injecter un volume d'échantillon 130 dans le dispositif bien supérieur à ce qui est possible en électrophorèse capillaire classique ou avec un dispositif de concentration formé d'un seul canal 135.

Un autre avantage est que l'échantillon 130 subit une purification : les molécules ou particules non chargées ou chargées en signe opposé des molécules ou particules d'intérêt sont éliminées de l'échantillon. Les molécules ou particules chargées de même signe que les molécules ou particules d'intérêt mais trop petites ou insuffisamment chargées sont également éliminées de l'échantillon. En particulier, les sels contenus dans l'échantillon sont éliminés lors de la concentration. Cette purification fait gagner en qualité de séparation, en degré de pureté des molécules ou particules après collecte.

Dans le dispositif 100 illustré partiellement en figures 1 et 2, une plaque 140 présentant des perçages traversant linéaires, ou lumières, 135 sépare deux canaux 105 et 115 de mêmes sections intérieures et extérieures. Ce mode de réalisation peut, par exemple, être réalisé par manchonnage ou collage ou soudage de ses constituants. Ce mode de réalisation a l'avantage d'augmenter le nombre de cols de la zone de concentration, ce qui peut permettre d'accroître le phénomène de concentration et le volume de l'échantillon traité. On note que la conduite de sortie 115 peut avoir une section interne différente de celle du canal d'arrivée 105.

On note que l'on peut réaliser la plaque 140 par usinage conventionnel, par usinage laser, DRIE (acronyme de Deep Reactive Ion Etching) ou une autre méthode d'usinage de micro-précision, pour obtenir des perçages dont le diamètre est de l'ordre de quelques microns à quelques dizaines de microns. On note aussi que l'on peut utiliser des perçages coniques, appelés « taper » en usinage laser.

On note aussi qu'il est plus avantageux pour la fabrication de réaliser une pluralité de canaux parallèles en sortie de la zone de concentration 110. Mais le parallélisme n'est pas nécessaire au bon fonctionnement du système.

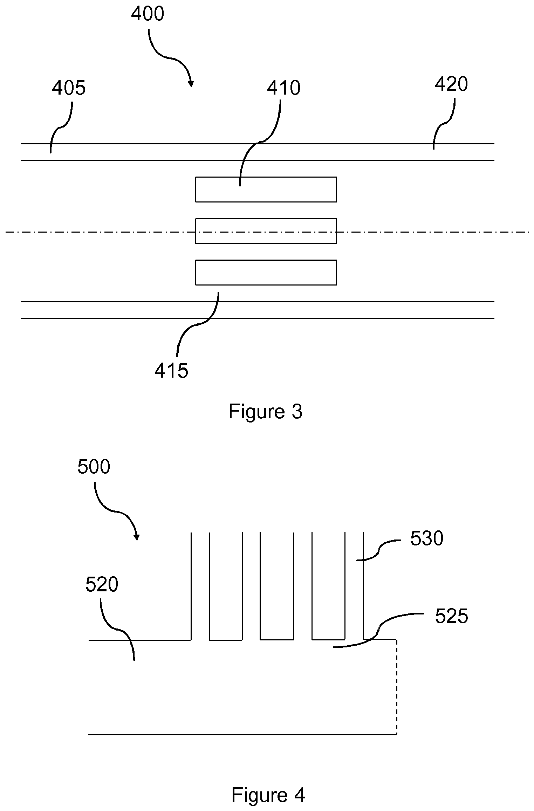

Dans le dispositif 400 illustré partiellement en figure 3, un multi-capillaire 410 présentant des canaux de sortie linéaires 415 sépare deux canaux 405 et 420 de mêmes sections intérieures et extérieures. Ce mode de réalisation peut, par exemple, être réalisé par manchonnage ou collage ou soudage de ses constituants. On note que la conduite de sortie 420 peut avoir une section interne différente de celle du canal d'arrivée 405.

On note qu'un multi-capillaire 410 est un capillaire présentant plusieurs canaux, ou voies. Pour l'insérer dans le dispositif, on le coupe et on le colle entre les canaux 405 et 420. Par rapport au mode de réalisation illustré en figures 1 et 2, on évite un usinage coûteux et on peut avoir des canaux ou voies de toutes longueurs souhaitées. Des multi-capillaires existent comme fibres optiques à cristaux photoniques, par exemple sous la marque déposée NKT Photonics.

En ce qui concerne les dispositifs à plusieurs capillaires montés en parallèle, tels que ceux illustrés en figures 1, 2 et 3, on note que des cônes peuvent remplacer les capillaires cylindriques, avec les effets expliqués ci-dessus pour la partie conique. De plus, en usinage laser d'une plaque de silice, on obtient plus facilement une telle disposition à cônes parallèles plutôt qu'une disposition à cylindres parallèles.

Le schéma illustré en figures 1, 2 et 3 se prête facilement à un changement d'échelle, pour passer d'un capillaire à une canalisation ou tuyau millimétrique, voire à des conduites plus grosses. On obtient alors un dispositif d'ultrafiltration avec des pores de microfiltration, donc avec des débits potentiellement plus élevés et moins de colmatage.

Des calculs simples montrent qu'une plaque de cinq mm d'épaisseur percée de trous de 7,5 $\mu$m de diamètre au pas carré de 20 $\mu$m présenterait un débit sous 1 bar de 2500 L/heure.m$^2$, performance bien supérieure aux membranes d'ultrafiltration utilisées dans les laboratoires (par exemple le système Vivaflow de Sartorius, ou le système Pellicon de Millipore, marques déposées).

De tels dispositifs devraient donc trouver des applications dans les procédés avals de purification/concentration en bioproduction (« DownStream Processes » dans le vocabulaire de cette communauté).

On observe, en figure 4, un mode de réalisation 500 du dispositif de concentration, constitué d'un canal d'arrivée 520 débouchant sur des capillaires de sortie 530 de concentration parallèles entre eux et formant, chacun, un angle avec le canal d'arrivée. La zone de concentration 525 se trouve là où le canal 520 débouche sur les capillaires 530 et/ou dans les entrées des capillaires 530.

Dans le mode de réalisation illustré en figure 4, un écoulement minoritaire, ou tout au moins partiel, va dans les capillaires de sortie 530, donc la concentration n'est pas de 100%. Cependant, en faisant circuler l'échantillon en circuit fermé, on peut obtenir une concentration proche de 100%.

On note que la somme des sections des canaux parallèles peut être égale ou supérieure à la section du canal d'arrivée et/ou de la conduite de sortie. En effet, la résistance hydrodynamique d'un ensemble de capillaires est bien supérieure à la résistance hydrodynamique d'un canal cylindrique de section égale à la somme des sections des capillaires. On obtient bien un accroissement du gradient de pression, et donc du cisaillement, sans qu'il y ait réduction de section.

Le dispositif de concentration, stacking ou séparation décrit en regard des figures 1, 2, 3 et 4 fonctionne pour l'analyse de macromolécules et de nanoparticules pour les sciences de la vie, donc en solution aqueuse, ainsi que pour des solutions organiques et les microparticules.

On observe, en figure 5, un système 700 comportant un dispositif de concentration, stacking et/ou de purification 705 et un instrument optionnel de préparation d'analyse et/ou d'analyse 710.

Le dispositif 705 est n'importe lequel des dispositifs décrits en regard des figures 1 à 4. Il comporte :

- un moyen 715 de mise en écoulement laminaire, pendant au moins une partie, dite « phase de concentration », de la durée de fonctionnement du système, du liquide viscoélastique, dans un dispositif de concentration, stacking et/ou de purification ledit dispositif comportant une zone de concentration 720 présentant, dans le sens dudit écoulement, une pluralité de canaux de sortie dimensionnés de telle sorte que le cisaillement moyen dans ces canaux est très supérieur, au moins double, au cisaillement moyen présent dans le canal d'arrivée dudit dispositif,
- un moyen 725 d'application d'un champ électrique entre l'entrée et la sortie de la zone de concentration, l'action du champ électrique sur les molécules ou particules d'intérêt étant, dans la zone de concentration, opposée au sens dudit écoulement et provoquant la retenue de molécules ou particules d'intérêt au moins dans la zone de concentration et
- un moyen 730 de transfert de l'échantillon concentré depuis la zone de concentration 720 vers la sortie.

Comme exposé ci-dessus, après la phase de concentration, le champ électrique présente une intensité inférieure ou égale au champ électrique appliqué pendant la phase de concentration, par exemple selon une pente décroissante linéaire ou par pallier ou encore une intensité nulle immédiatement après la fin de l'application de la phase de concentration. Il peut aussi être en direction inverse de celle utilisée pour la concentration, et fort ou faible selon les caractéristiques de l'électrophorèse qu'on applique alors.

Parmi les types d'instruments d'analyse 710 optionnels, on cite notamment :

- l'électrophorèse capillaire, auquel cas, il est avantageux d'utiliser l'alimentation électrique de l'électrophorèse capillaire comme moyen 725 d'application du champ électrique, et le générateur de pression de l'électrophorèse capillaire comme moyen 715 de mise en écoulement capillaire,
- le spectromètre de masse,
- le gel filtration ou chromatographie d'exclusion de taille,
- les spectromètres et
- la chromatographie liquide, sous toutes ses formes (LC, HPLC, UPLC, micro-LC, nano-LC).
- un simple détecteur, par exemple optique (absorbance, fluorescence, réfraction), conductimétrique, électrochimique,...
- Un collecteur de fraction,
- Un système de vannes permettant de collecter uniquement les molécules ou particules sélectionnées par le dispositif de concentration et de séparation.

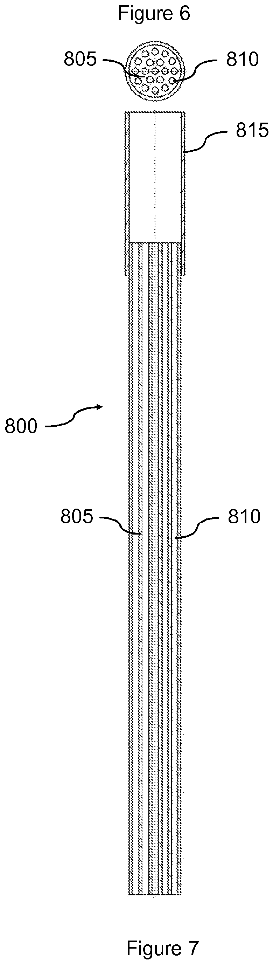

On observe, en figures 6 et 7, un multicapillaire 800 comportant, dans un cylindre 805, des canaux parallèles cylindriques 810. Un manchon 815 peut être ajouté pour aider l'assemblage du multicapillaire 800 à un moyen 715 de mise en écoulement laminaire du liquide.

On observe, en figure 8, un dispositif de concentration 900 comportant un multi-capillaire 910 présentant des canaux de sortie linéaires 915 sépare deux canaux 405 et 420 de mêmes sections intérieures et extérieures. Les canaux de sortie 915 comportent, chacun, un cône d'entrée 920. Ces cônes 920 et les canaux de sortie 915 sont, par exemple, formés dans un diaphragme perpendiculaire à l'axe central d'écoulement du fluide en sortie de la zone de concentration.

On donne, ci-dessous, un complément de description pour le dimensionnement des canaux de sortie de la zone de concentration et, notamment, des explications sur le calcul du dimensionnement

L'homme de l'art sait dimensionner le nombre et la section des canaux de telle sorte que le cisaillement dans les canaux de sortie de la zone de concentration dépasse le cisaillement dans le canal d'entrée.

Si tous les canaux sont cylindriques, et pour des écoulements laminaires d'un liquide incompressible, il est possible d'avoir une résolution analytique du problème, comme nous le montrons ci-dessous (équations de Poiseuille).

Si les canaux sont des canaux plans, avec une hauteur très petite devant leur largeur, une solution analytique au problème existe également (équations de Poiseuille plan).

Enfin, pour d'autres formes de section des canaux, les outils de modélisation multi physique de l'état de l'art, comme le logiciel COMSOL, permettent de trouver le dimensionnement nécessaire, en résolvant par éléments finis les équations de Navier-Stokes.

Considérons le cas de base, où le canal d'arrivée dans la zone de concentration est une conduite cylindrique de rayon $R_1$, et où la pluralité de canaux de sortie de la zone de concentration est constituée de n canaux cylindriques identiques de rayon $R_2$.

D'une façon générale, dans un écoulement laminaire dans une conduite, on a la relation :

$$\text{Équation 1 :} \quad \Delta P = Rh \times Q \quad,$$

avec $\Delta P$ chute de pression aux bornes de la conduite, Rh résistance hydraulique de la conduite, et Q le débit de l'écoulement.

Par unité de longueur de la conduite, on a :

$$\text{Équation 2 :} \quad \frac{dP}{dz} = \frac{dRh}{dz} \times Q \quad,$$

dz étant une unité infinitésimale de longueur.

Le débit Q est identique dans le canal d'arrivée et dans la pluralité des canaux de sortie. D'où :

$$\text{Équation 3 :} \quad Q = \frac{\frac{dP_1}{dz}}{\frac{dRh_1}{dz}} = \frac{\frac{dP_2}{dz}}{\frac{dRh_2}{dz}} \quad,$$

les indices 1 et 2 se référant au canal d'arrivée et à la pluralité des canaux de sortie respectivement.

Pour un écoulement laminaire d'un fluide newtonien dans une conduite cylindrique, on a, selon les équations de Poiseuille, que l'on trouve par exemple dans l'article Wikipedia correspondant (https://fr.wikipedia.org/wiki/%C3%89coulement de_Poiseuille):

$$\text{Équation 4 :} \quad v(r) = v_{\max} \left(1 - \frac{r^2}{R^2}\right),$$

avec $v(r)$ la vitesse du fluide en tout point situé à la distance r de l'axe de la conduite, et $v_{\max}$ la vitesse maximale du fluide, au centre de la conduite.

$v_{\max}$ s'exprime aussi simplement de façon analytique :

$$\text{Équation 5 :} \quad v_{\max} = \frac{R^2}{4\mu} \frac{dP}{dz}$$

La contrainte de cisaillement vaut par définition :

$$\text{Équation 6 :} \quad \sigma(r) = \mu \frac{dv(r)}{dr} \quad,$$

$\mu$ viscosité dynamique du fluide.

En dérivant Équation 4, en reportant $\frac{dv(r)}{dr}$ dans l'Équation 6, et en reportant également l'expression de $v_{max\square}$ de l'Équation 5, on obtient :

$$\text{Équation 7 :} \quad \sigma(r) = \frac{r}{2} \frac{dP}{dz}$$

A mi-rayon de la conduite, le cisaillement moyen vaut donc :

$$\text{Équation 8 :} \quad \sigma_{moy} = \frac{R}{4} \frac{dP}{dz}$$

Ceci donne la valeur de $\frac{dP}{dz}$ que l'on peut reporter dans Équation 3.

De la même façon, les équations de Poiseuille donnent la valeur de $R_h$ :

$$\text{Équation 9 :} \quad R_h = \frac{8\mu L}{\pi R^4},$$

L longueur de la conduite. Donc, par unité de longueur :

$$\text{Équation 10 :} \quad \frac{dR_h}{dz} = \frac{8\mu}{\pi R^4}$$

Nous avons donc, en reportant Équation 8 et Équation 10 dans Équation 3 :

$$\text{Équation 11 :} \quad Q = \frac{4\sigma_{moy,1}}{R_1} \times \frac{\pi R_1^4}{8\mu} = \frac{\pi \, \sigma_{moy,1} \, R_1^3}{2\mu}$$

Puisque les n canaux de sortie sont identiques, on a $Q = n\,q_2$, $q_2$ étant le débit dans chacun des canaux de sortie.

Les équations précédentes s'appliquent pour chaque canal de sortie, et l'Équation 11 devient :

$$\text{Équation 12 :} \quad Q = \frac{\pi \, \sigma_{moy,1} \, R_1^3}{2\mu} = n \frac{\pi \, \sigma_{moy,2} \, R_2^3}{2\mu}$$

On en déduit que le rapport des cisaillements moyen dans le système vaut :

$$\text{Équation 13 :} \quad \frac{\sigma_{moy,2}}{\sigma_{moy,1}} = \frac{1}{n} \times \left(\frac{R_1}{R_2}\right)^3$$

Ainsi, si on conçoit un dispositif avec un canal d'arrivée de rayon 1,5 mm, et 1000 canaux de sortie de rayon 25 μm, on obtient un rapport des cisaillements moyens de (Équation 13) :

$$\frac{\sigma_{moy,2}}{\sigma_{moy,1}} = \frac{1}{1000} \times \left(\frac{1500}{25}\right)^3 = 216$$

.

On note qu'il est plus facile d'obtenir un fort cisaillement dans les canaux de sortie si la somme des sections de ces canaux est très inférieure à la section du canal d'arrivée.

Cependant, si le nombre des canaux de sortie est au moins égal à 10000, alors on peut obtenir un rapport de cisaillement supérieur ou égal à 100, alors que la somme des sections des canaux de sortie est égale à la section d'entrée. Plus le nombre de canaux est grand, et plus cela est possible.

Ainsi, si on conçoit un dispositif avec un canal d'arrivée de rayon 1,5 mm, et 10000 canaux de sortie de rayon de 15 μm, on obtient un rapport des cisaillements moyens de (Équation 13) :

$$\frac{\sigma_{moy,2}}{\sigma_{moy,1}} = \frac{1}{10000} \times \left(\frac{1500}{15}\right)^3 = 100$$

,

alors que la section du canal d'arrivée et la section totale des canaux de sortie sont égales et valent 7,07 mm$^2$.

Enfin, il faut noter que les équations de Poiseuille utilisées ci-dessus sont vraies pour un liquide newtonien, alors que la mise en oeuvre de la présente invention requiert un liquide viscoélastique. En fait, les équations de Poiseuille sont vraies quand la viscosité $\mu$ est indépendante du cisaillement. La viscosité d'un fluide est une propriété distincte de ses propriétés élastiques, et il existe des polymères qui rendent le liquide viscoélastique, alors que la viscosité reste constante sur une large gamme de cisaillement. L'article de Del Giudice et al., 2015, Lab Chip 15, 783-792 montre ainsi que des solutions aqueuses contenant du Poly Ethylene Oxide (PEO) jusqu'à 0,3%, ou du polyacrylamide (PAM) jusqu'à 0,1%, ont une viscosité constante pour des taux de cisaillement allant de 0 (fluide au repos) à 200 s$^{-1}$, qui sont des valeurs de cisaillement très suffisantes pour faire fonctionner le système objet de la présente invention. Il en est de même avec des solutions de Polyvinylpyrrolidone 8% (PVP), selon Romeo et al., 2013, 13, 2802-2807.

Au cas où le développeur d'un dispositif ne dispose pas d'un fluide viscoélastique permettant la concentration de molécules ou particules d'intérêt dans des conditions où la viscosité du fluide est constante, le développeur utilise une simulation multiphysique comme mentionnée plus haut, en utilisant la forme la plus générale des équations de Navier-Stokes, qui fait intervenir un tenseur de contraintes visqueuses, et en déterminant expérimentalement les paramètres de ce tenseur.

Le rapport des cisaillements à mettre en oeuvre entre le canal d'arrivée et les canaux de sortie de la zone de concentration dépend de l'application visée, et du temps que l'on se donne pour la concentration voulue.

Si l'échantillon à concentrer est constitué d'une population de molécules ou particules strictement identiques, le rapport des cisaillements n'a pas nécessairement besoin d'être important ; il suffit de régler la vitesse de flux et le champ électrique de telle façon que la molécule à concentrer avance avec l'écoulement dans le canal d'arrivée, et recule par électrophorèse le long des parois dans les canaux de sortie, comme expliqué ci-dessus.

Toutefois, si le rapport des ratios est faible, les molécules à concentrer sont assez fortement plaquées vers les parois dans le canal d'arrivée, et elles avancent seulement lentement dans ce canal, limitant la vitesse de concentration. Pour aller plus vite, on a intérêt à augmenter le rapport des cisaillements, de façon à ce que les molécules soient peu plaquées vers les parois, et donc peu ralenties, dans l'écoulement du canal d'entrée. En pratique, on a intérêt à avoir un rapport de cisaillement d'au moins 2, et préférentiellement d'au moins 10, entre le canal d'entrée et les canaux de sortie.

Si maintenant l'échantillon à concentrer est constitué d'une population hétérogène de molécules ou particules, qui subissent donc une force différente de placage à la paroi selon leur taille et leur charge, il faut régler le cisaillement de telle façon que les molécules les plus petites et/ou les moins chargées, qui sont les plus difficiles à arrêter dans l'écoulement, reculent par électrophorèse dans les canaux de sortie, pendant que les molécules les plus grosses et/ou les plus chargées, qui subissent le placage vers la paroi le plus important, avancent suffisamment vite dans le canal d'arrivée. Dans ces cas, le ratio des cisaillements à mettre en oeuvre dépend donc de l'hétérogénéité des molécules à concentrer. Pour des fragments d'ADN compris entre 0,1 et 1,5 kb, ou entre 0,5 et 50 kb, on utilise préférentiellement un ratio de cisaillement supérieur à 100.

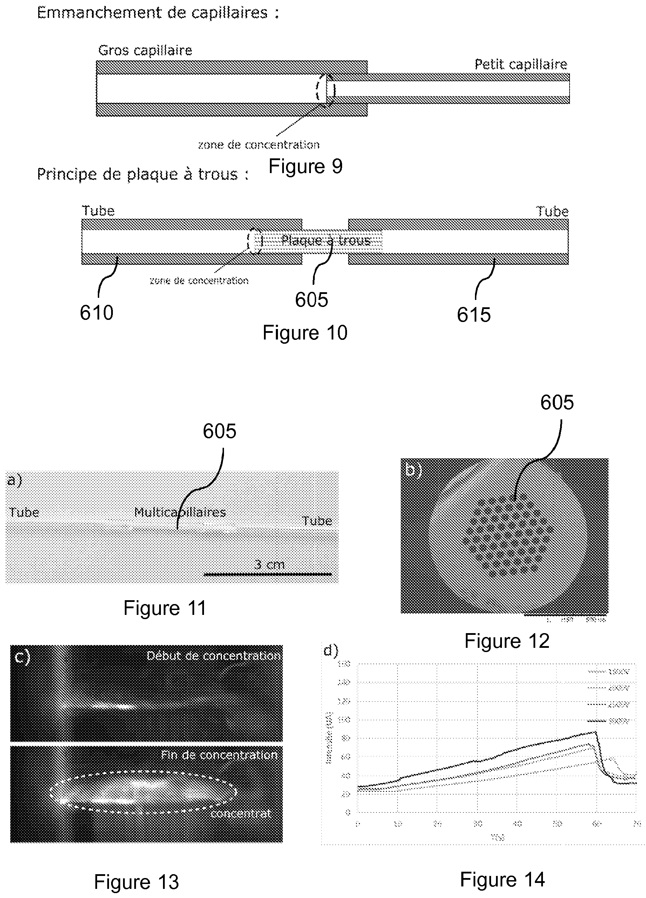

On donne, en regard des figures 9 à 14, une démonstration expérimentale d'une concentration d'ADN à l'aide d'un tronçon de multi-capillaires. La figure 9 montre un schéma de dispositif monocapillaire de concentration. La figure 10 montre un schéma de dispositif multi-capillaires conforme à des aspects de l'invention. Ces schémas de principe illustrent la concentration de l'ADN dans un système simple (emmanchement de capillaires, figure 9) et dans le cas d'un dispositif multi-capillaires.

Le dispositif multi-capillaire de la figure 10 a été réalisé en emmanchant un multicapillaire 605 de longueur 3 cm et présentant 61 capillaires de 40 $\mu$m de diamètre dans deux tubes à hématocrite 610 et 615 de longueur 60cm et de diamètre interne 1.1 mm (figure 11 et 12), situés de part et d'autre du multi-capillaire.

Une solution, composée de TBE1x+PVP360 1%, et contenant l'échantillon d'ADN (kb ladder Extended à 0.1$\mu$g/mL marqué au YoYo ; New England Biolabs, reference N3239S), est injectée en continu dans le dispositif illustré en figure 10, de la gauche vers la droite selon le schéma de la figure 10. Des pressions comprises entre 50 et 150 mBar sont appliquées, ce qui génère des débits compris entre 10 et 30 $\mu$L/min (v=2.2-6.7mm/s dans le multicapillaire 605).

Afin de concentrer l'échantillon, une tension est appliquée aux bornes du dispositif permettant ainsi de créer un champ électrique dans le multicapillaire 605 compris entre 45 et 270V/cm, champ électrique exerçant sur l'ADN une force opposée au flux hydrodynamique.

Pour une pression fixée, le champ électrique est appliqué pendant une minute. L'ADN se concentre alors majoritairement à l'entrée des canaux du multicapillaire 605. Puis la pression est coupée, alors que le champ électrique est toujours appliqué. L'ADN migre alors par électrophorèse de la droite vers la gauche, et le concentrât est observé dans le tube hématocrite au démarrage de cette électrophorèse (figure 13).

Dans ces conditions expérimentales, les volumes traités sont compris entre 10 et 30 $\mu$l. Pendant l'étape de concentration, nous observons une augmentation de l'intensité de fluorescence à la jonction entre le multicapillaire et le tube à hématocrite (figure 14).

Ces premiers résultats nous ont donc permis de démontrer la faisabilité de concentrer de l'ADN à l'aide d'un multi-capillaire avec un débit de 10 à 30 $\mu$l/min, débit bien plus fort que ce qui est atteignable avec un dispositif monocapillaire.

Figure 11 : Photographie du dispositif multi-capillaire de concentration ; Figure 12 : image au microscope électronique à balayage du multicapillaire 605 ayant été utilisé pour réaliser le dispositif ; Figure 13 : Photographies réalisées durant la concentration, celle du dessus en début de concentration, celle du dessous en fin de concentration ; Figure 14 : Evolution de l'intensité de fluorescence durant la concentration pour une pression de 100mBar et différentes tensions. L'arrêt de la concentration a lieu au temps d'environ 60 secondes.

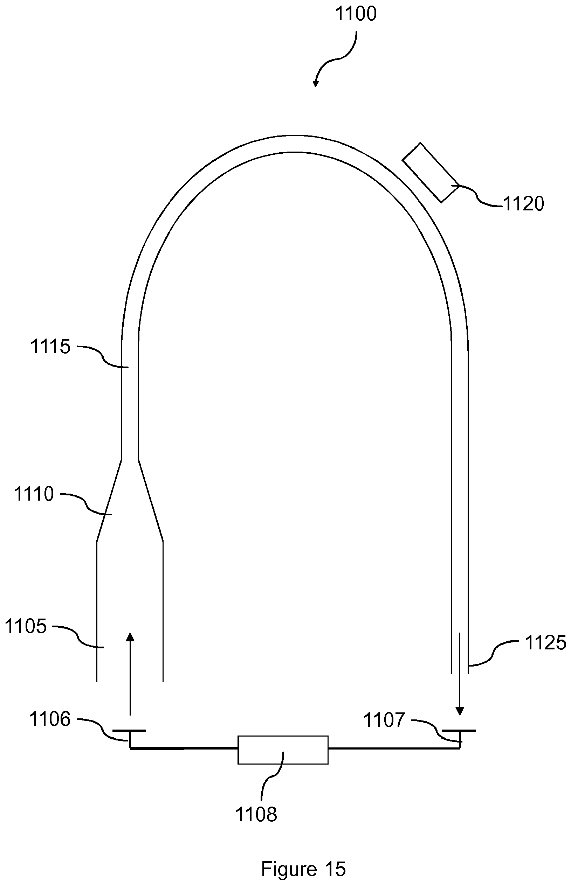

On observe, en figure 15, une partie 1100 d'un mode de réalisation du dispositif de concentration, stacking et/ou de purification pour analyse objet de la présente invention. Cette partie 1100 comporte un capillaire d'injection 1105, par exemple de diamètre de 250 $\mu$m, une zone de concentration 1110 un capillaire de séparation 1115, par exemple de diamètre compris entre 50 $\mu$m et 75 $\mu$m, un détecteur 1120 optionnel et une sortie 1125.

La zone de concentration 1110 peut être conique, droite ou comporter une pluralité de canaux. Des électrodes 1106 et 1107 portées à des potentiels électriques différents, génèrent un champ électrique dans l'ensemble du fluide présent dans la partie 1100. Un moyen 1108 de modulation de ce champ électrique fait, conformément à la présente invention, varier la différence de potentiels entre les électrodes 1106 et 1107, comme exposé plus loin.

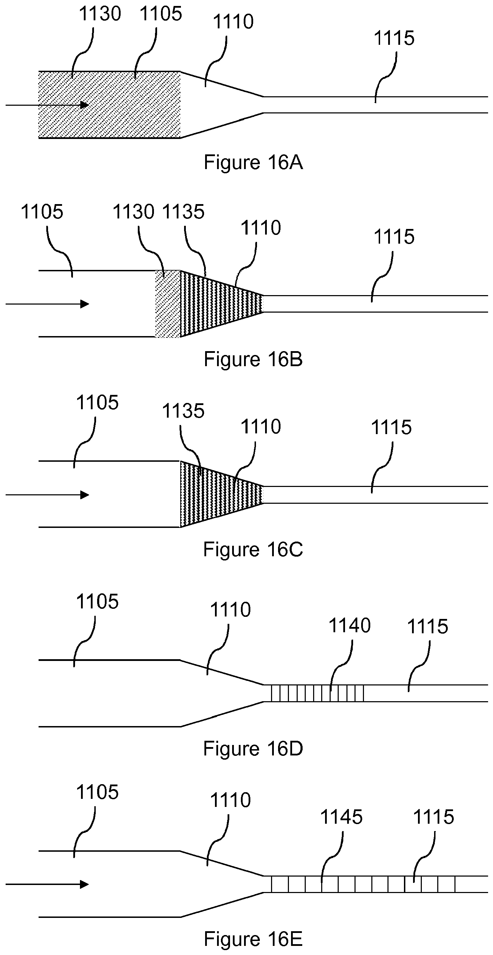

Comme illustré en figure 16A, pour mettre en oeuvre le mode de réalisation du dispositif illustré en figure 15, on réalise, d'abord, une injection hydrodynamique ou électrocinétique d'un échantillon 1130, selon des méthodes classiques en électrophorèse capillaire. On note cependant que, du fait du diamètre du capillaire d'injection 1105, on peut injecter ici un volume beaucoup plus important qu'en électrophorèse capillaire classique, par exemple entre 0,1 et 10 $\mu$l. Le capillaire d'injection 1105, la zone de concentration 1110 et le capillaire de séparation 1115 ont été remplis au préalable du fluide viscoélastique. Préférentiellement, l'échantillon 1130 a également été dilué dans ce fluide viscoélastique.

Comme illustré en figure 16B, après l'injection, l'entrée du capillaire d'injection 1105 est mise dans le flacon contenant le fluide ou tampon viscoélastique et on applique un différentiel de pression et un différentiel de tension électrique entre l'entrée du capillaire d'injection 1105 et la sortie 1125 du capillaire de séparation 1115. L'action du champ électrique est opposée au flux de tampon viscoélastique, la direction du champ électrique dépendant du signe de la charge de la molécule/particule à concentrer. Comme expliqué, ci-dessus, les particules ou molécules 1135 de l'échantillon 1130 se concentrent dans la zone de concentration 1110 avec une séparation selon la taille et la charge électrique, le long de lignes d'isocisaillement (c'est-à-dire de cisaillements égaux).

Comme illustré en figure 16C, une fois que tout l'échantillon 1130 est passé dans la zone de concentration 1110, il y reste les particules ou molécules 1135 concentrées et séparées. On effectue alors un lavage en faisant passer un excès de fluide viscoélastique. Ainsi, les molécules ou particules non retenues dans la zone de concentration 1110 sont entraînées hors du capillaire de séparation 1115 et ne gênent donc pas la détection. Les particules ou molécules 1135 sont ainsi purifiées.

Comme illustré en figure 16D, on réalise alors la mise en place du concentrât destiné à la séparation 1140, appelé, par la suite « plug ». A cet effet, on élimine les différentiels de pression et de tension électrique. Puis on fait migrer par électrophorèse simple les molécules ou particules concentrées de la fin de la zone de concentration 1110 vers le début du capillaire de séparation 1115. Ce plug de séparation a une longueur indépendante du volume initial du plug d'injection. Dans un autre mode de réalisation de la sortie après concentration, on fait migrer les molécules concentrées par simple pression, avec un champ électrique nul. On transfère le concentrât de la zone de concentration à la zone de départ pour l'analyse (« plug d'injection ») ou simplement pour la collecte des molécules concentrées et purifiées.

On note qu'il n'y a pas de stacking lors de cette sortie : c'est l'étape de concentration qui a joué le rôle de stacking, qui fait que le plug de séparation a un volume indépendant du volume initial de l'échantillon.

Comme illustré en figure 16E, on réalise ensuite éventuellement une séparation supplémentaire, par modulation du champ électrique appliqué, et la détection. La séparation peut avoir lieu soit par électrophorèse simple, soit par séparation comme exposée dans la demande de brevet FR 2 994 103, en appliquant des pressions et tension en sens opposés.

Dans les modes de réalisation comportant un détecteur 1120, lorsque les particules ou molécules 1135 séparées selon la distribution 1145 ainsi obtenue, passent devant ce détecteur 1120, elles y sont détectées et analysées.

On note que l'angle formé par les parois de la zone de concentration 1110 avec l'axe central commun aux capillaires 1105 et 1115 a un effet sur la concentration. Un angle important, donnant un cône court, génère des gradients de force abrupts et une zone de concentration 1110 ramassée. Au contraire, un angle faible, correspondant à un cône allongé, génère des gradients de force plus faibles et une zone de concentration 1110 plus étendue.

Un avantage de ce mode de réalisation, tient en ce que les molécules ou particules les plus rapides se trouvent les plus proches du col de la zone de concentration 1110. Lors de l'étape de séparation et de détection (figure 16E), elles restent devant les molécules ou particules plus lentes et n'ont donc pas besoin de les doubler.

Grâce à la mise en oeuvre de la présente invention, on peut injecter un volume d'échantillon 1130 dans le dispositif bien supérieur à ce qui est possible en électrophorèse capillaire classique. En effet, en électrophorèse capillaire classique, il faut conserver une taille raisonnable du plug d'injection, sous peine de perdre en résolution d'analyse.

Un autre avantage de la mise en oeuvre de la présente invention est que l'échantillon 1130 subit une purification ; les molécules ou particules non chargées ou chargées en signe opposé des molécules ou particules d'intérêt sont éliminées de l'échantillon. Les molécules ou particules chargées de même signe que les molécules ou particules d'intérêt mais trop petites ou insuffisamment chargées sont également éliminées de l'échantillon. En particulier, les sels contenus dans l'échantillon sont éliminés lors de la concentration. Cette purification fait gagner en qualité de séparation.

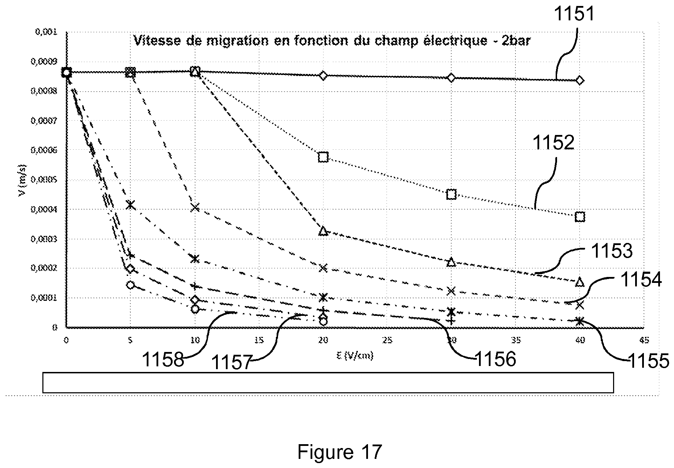

La figure 17 montre, pour un capillaire simple, sans concentration, avec un détecteur fixe, situé à 12 cm de l'entrée, des courbes de couplage montrant l'influence du champ électrique sur la vitesse de fragments d'ADN. On introduit à l'entrée du capillaire un mélange de différentes tailles, puis on applique pression et champ électrique en opposition.

Les courbes 1151 à 1158 correspondent à des fragments d'ADN de taille, respectivement 0,5 kb, 1 kb, 1,5 kb, 2 kb, 3 kb, 5 kb, 10 kb et 48,5 kb.

Les courbes 1151 à 1158 sont obtenues en tampon TBE + PVP 1%. Capillaire de 25 $\mu$m de diamètre, 1 m de long. Détecteur LIF à 12 cm de l'entrée. Pression : 2 bars. La tension appliquée varie de 0 à 4 kV (champ électrique de 0 à 40 V/cm).

Pour un champ électrique donné (sur l'axe des x), on voit que les fragments d'ADN ont une vitesse différente selon leur taille. Le détecteur les voit donc passer à des instants différents : il y a séparation.

On peut extrapoler ces courbes pour déterminer quand est-ce qu'elles coupent l'axe des x à une valeur définissant un point d'arrêt et donc en tirer les conditions de concentration pour une vitesse fluidique donnée.

On observe que le champ électrique d'arrêt dépend de la taille des fragments d'ADN. Donc, pour certains champs, les fragments les plus petits (1 kb) ne seront pas arrêtés, alors que les fragments les plus grands sont à l'arrêt (ou repartent en arrière). La vitesse fluidique à laquelle ces courbes sont acquises peut être la vitesse au col du concentrateur. On voit donc que, en fonction du champ électrique, certains fragments passent le col, et d'autres non.

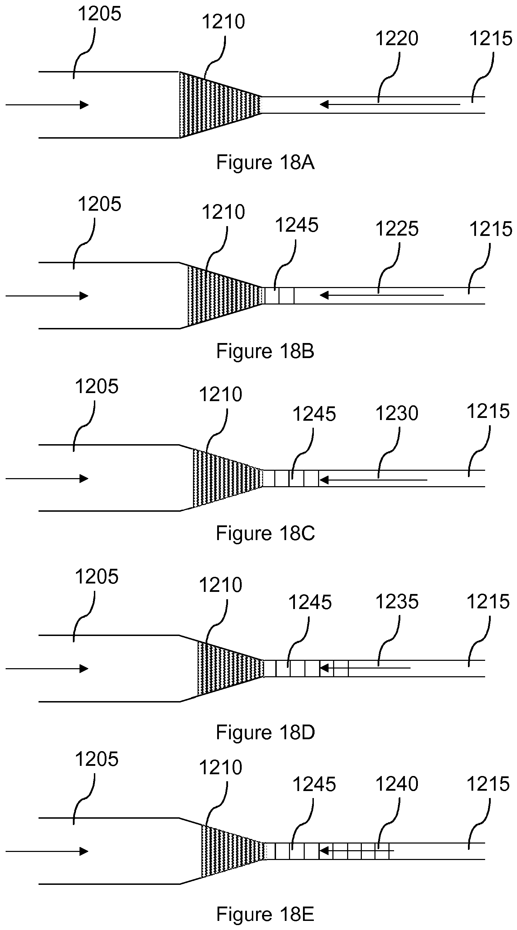

Les figures 18A à 18E représentent un perfectionnement du dispositif de concentration, pour augmenter la séparation des particules et molécules retenues dans la zone de concentration, en vue de leur analyse.

On retrouve, dans ces figures 18A à 18E, un capillaire d'injection 1205, une zone de concentration 1210 et un capillaire de séparation 1215. Le champ électrique appliqué a été représenté par les flèches 1220 à 1240, respectivement dans les figures 18A à 18E. La longueur de ces flèches est représentative de l'intensité du champ électrique appliqué.

Comme illustré en figure 18A, à la fin de l'étape de lavage, les molécules et particules d'intérêts sont retenues dans la zone de concentration 1210, et disposées à une distance du col de jonction entre cette zone de concentration 1210 et le capillaire de séparation 1215, qui est fonction de leurs tailles et charges électriques et de l'intensité du champ électrique 1220.

Puis, on réduit le champ électrique appliqué, par exemple de 10 %, comme illustré par la flèche 1225 en figure 18B. Les molécules et particules d'intérêt les plus proches du col franchissent alors ce col et pénètrent dans le capillaire de séparation 1215 pendant que les autres molécules et particules d'intérêt restent dans la zone de concentration 1210.

Si on maintient le champ électrique 1225, les particules qui ont déjà pénétré dans le capillaire de séparation 1215 sont entraînées par le fluide viscoélastique en déplacement laminaire et atteignent le détecteur placé en aval du col.

Ici, comme illustré en figures 18C à 18E, on continue de réduire l'intensité du champ électrique, par exemple selon une fonction linéaire décroissante. Ce qui a pour effet de faire passer les molécules ou particules d'intérêt dans le col successivement en fonction de leurs tailles et charges électriques.

On réalise ainsi une séparation ordonnée des molécules ou particules d'intérêt à transférer.

On note que, dans les modes de réalisation comportant un détecteur, on a intérêt à mettre ce détecteur le plus près possible du col, pour réduire au maximum les effets de diffusions axiale, brownienne ou liée au profil parabolique de l'écoulement laminaire, qui risquent de re-mélanger les molécules et particules d'intérêt de différentes charges et tailles.

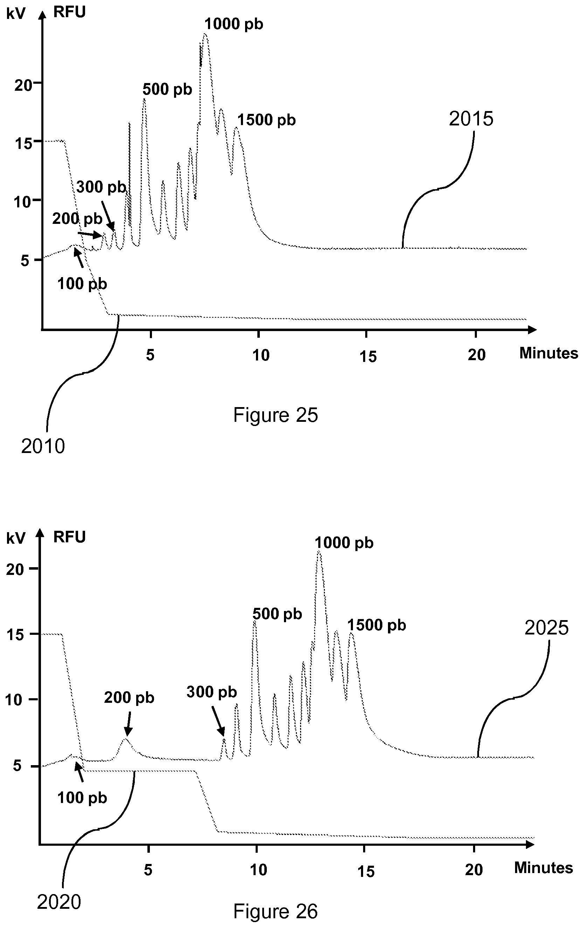

On note que, selon le perfectionnement exposé en regard des figures 18A à 18E, on peut ajuster la séparation entre deux pics de détection de molécules ou particules en modulant la vitesse de diminution de l'intensité du champ électrique. On peut, par exemple, réaliser des paliers, ce qui conduit à la formation de paliers de tailles et charges des molécules et particules passant devant le détecteur. Ce mode de fonctionnement par palier est particulièrement bien adapté pour préparer des fractions d'ADN par tranche de taille, ou des fractions d'autres analytes selon leurs types, tailles ou charges. Ce mode de fonctionnement par palier est illustré dans les figures 25 et 26 décrites plus loin.

Ce perfectionnement présente des avantages complémentaires :

- il n'est plus nécessaire de prévoir un long capillaire de séparation ; les dimensions du dispositif objet de la présente invention sont donc réduites ;
- le problème de pollution évoqué plus haut étant proportionnel à la longueur du capillaire de séparation, il est grandement résolu par la très petite longueur de ce capillaire.

Ainsi, préférentiellement, le système objet de la présente invention comporte un moyen de modulation configuré pour commander le moyen d'application du champ électrique pour appliquer, après la phase de concentration, un champ électrique d'intensité non nulle et inférieure à l'intensité du champ électrique appliqué pendant la phase de concentration.

Optionnellement, après la phase de concentration, on modifie aussi la vitesse du fluide viscoélastique pour réaliser la sortie de l'échantillon concentré.

Dans des modes de réalisation, on utilise des puces microfluidiques dont la hauteur de la veine est fixe et faible, par exemple de 10 $\mu$m. Pour réaliser le biseau de la zone de concentration, on diminue la largeur du canal, sans modifier sa hauteur. Ces modes de réalisation ont l'avantage que les molécules à retenir ont très peu de chemin à parcourir pour atteindre leur position d'arrêt près de la paroi. On peut ainsi réaliser des différences de largeur plus importantes. On peut par exemple réaliser des dispositifs 1250 tels que représenté en figure 19 dans lesquels la largeur du capillaire d'injection 1255 est entre 300 et 1000 $\mu$m, notamment de 600 $\mu$m et la largeur du col 1260 est de 10 à 20 $\mu$m, et l'angle formé entre les parois latérales de la zone de concentration avec l'axe central du canal de 10° à 45°. Dans la figure 19, la zone de concentration est suivie d'une zone symétrique 1265, le capillaire de séparation 1270 ayant la même largeur que le capillaire d'injection 1255.

Dans les modes de réalisation basés sur des capillaires cylindriques à section circulaire, il arrive que des molécules ou particules d'intérêt, emportées par le flux et éloignées des parois à l'entrée de la zone de concentration, traversent la zone de concentration sans avoir le temps d'atteindre leur position d'arrêt proche de la paroi. Ces particules ou molécules franchissent alors le col et arrivent dans le capillaire de séparation, où elles rencontrent des conditions d'écoulement, de cisaillement et de tension électrique qui les font repartir en arrière vers le col. Si le dispositif est conçu et fabriqué de telle façon qu'un profil de Poiseuille, qui décrit l'écoulement laminaire d'un liquide visqueux dans une conduite cylindrique, est maintenu tout au long de la transition entre la zone de concentration et le capillaire de séparation, les molécules ou particules d'intérêt qui ont franchi le col repartent en arrière, refranchissent le col en sens inverse et trouvent leur position d'équilibre dans la zone de concentration.

Cependant, dans une géométrie avec des cassures, bourrelets ou autres imperfections, l'écoulement laminaire est perturbé et le profil parabolique de Poiseuille n'est pas présent à l'entrée du capillaire de séparation 1215. Dans ce cas, une partie 1245 des molécules et particules d'intérêt ne peuvent pas retourner dans la zone de concentration 1210 et elles restent concentrées en entrée du capillaire de séparation 1215, comme illustré en figure 20.

Dans ces cas, au moins une partie de la concentration de molécules ou de particules d'intérêt se trouve en aval du col séparant la zone de restriction du capillaire de séparation.

Le moyen de modulation, ou vanne électrique, du dispositif de la présente invention fonctionne aussi dans ces cas où on concentre en aval du col ou des cols du concentrateur (concentrateur « inertiel »).

La figure 21 représente une variante de réalisation des dispositifs illustrés en figures 15 à 20.

Dans le dispositif 1300 illustré partiellement en figure 21, la zone de concentration 1315 présente un angle de 90° avec l'axe central des capillaires d'injection 1305 et de séparation 1320. Ces capillaires présentent le même diamètre externe mais des canaux 1310 et 1325 de diamètres internes différents. Ce changement de diamètre interne constitue un diaphragme perpendiculaire à l'axe central du flux du liquide viscoélastique. L'avantage de ce mode de réalisation est qu'il peut être réalisé par collage de deux capillaires à sections externes constantes, donc aussi par manchonnage.

On note que, dans ce type de configuration présentant un angle droit, le volume de concentration est plus important que dans les configurations présentant une partie en biseau ou en cône. On augmente ainsi la capacité du système et on réduit ainsi les effets liés à l'adsorption aux parois. En revanche, les molécules ou particules concentrées ne sont pas séparées selon leur type, taille ou charge pendant la phase de concentration.

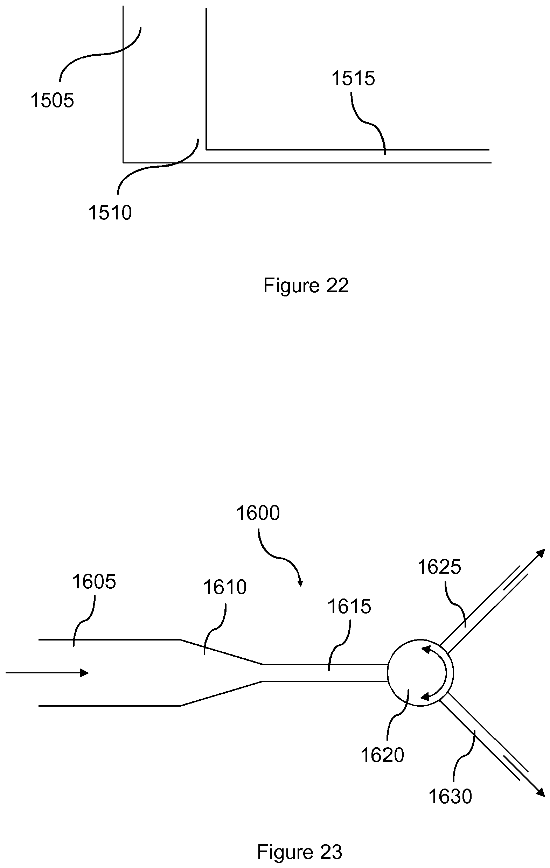

On observe, en figure 22, un mode de réalisation constitué de la réunion de deux capillaires 1505 et 1515, l'intersection 1510 de ces capillaires formant un angle, ici un angle droit. A cette intersection 1510 se trouve la zone de concentration des molécules ou particules d'intérêt. On note que le capillaire 1505 peut être remplacé par une cuve, ou constituer directement la cuve échantillon.

Le dispositif de concentration, stacking ou séparation décrit en regard des figures 15 à 22 fonctionne sur l'électrophorèse capillaire, l'analyse de macromolécules et de nanoparticules pour les sciences de la vie, donc en solution aqueuse, ainsi que pour des solutions organiques et les microparticules.

La figure 23 montre un perfectionnement applicable à tous les modes de réalisation. Ce perfectionnement consiste à positionner une vanne 1620 entre, d'une part, un dispositif 1600 comportant un capillaire d'injection 1605, une zone de concentration 1610 et un capillaire de séparation ou de sortie 1615 et, d'autre part, un capillaire de rejet 1625 ou un capillaire 1630 d'entrée d'un instrument d'analyse ou d'un instrument de préparation d'analyse ou simplement d'un récipient de collecte. La vanne 1620 est, par exemple, une vanne rotative de type HPLC (Chromatographie en phase liquide à haute performance).

Au cours des étapes de concentration et de lavage, la vanne rotative 1620 évacue le fluide viscoélastique et les molécules et particules non retenues dans la zone de concentration vers le capillaire de rejet. Au contraire, pour l'analyse ou la collecte, la vanne rotative 1620 oriente le fluide viscoélastique et les molécules ou particules d'intérêt vers le détecteur ou l'instrument.

Lorsqu'on utilise le dispositif dans un but préparatif à l'échelle du laboratoire, on le couple à un collecteur de fractions, tel qu'on en utilise classiquement dans les techniques de chromatographie.

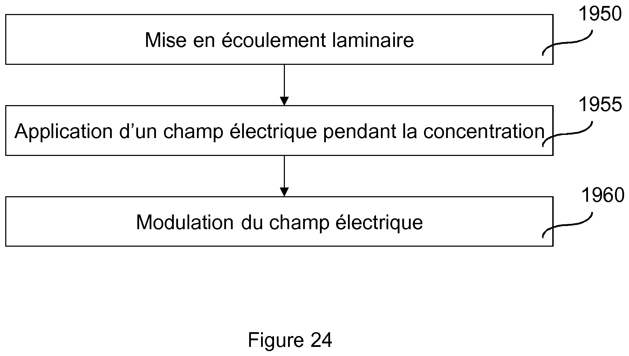

Comme illustré en figure 24, le procédé de traitement de molécules ou particules d'intérêt véhiculées par un liquide viscoélastique comporte :

- une étape 1950 de mise en écoulement laminaire, pendant au moins une partie dite « phase de concentration », du liquide viscoélastique dans un dispositif de concentration, stacking et/ou de purification, ledit dispositif comportant une zone de concentration présentant, dans le sens dudit écoulement, une surface de section en entrée supérieure à la surface de section de chaque canal en sortie,
- au moins pendant la phase de concentration, une étape 1955 d'application d'un champ électrique entre l'entrée et la sortie de la zone de concentration, l'action du champ électrique sur les molécules ou particules d'intérêt étant, dans la zone de concentration, opposée au sens dudit écoulement et provoquant la retenue de molécules ou particules d'intérêt au moins dans la zone de concentration,
- une étape 1960 de modulation de modulation du champ électrique pour appliquer, après la phase de concentration, un champ électrique d'intensité non nulle et inférieure à l'intensité du champ électrique appliqué pendant la phase de concentration.

Les figures 25 et 26 démontrent l'effet de vanne électrique obtenu par la mise en oeuvre de la présente invention. Dans le montage utilisé, un palier à 5 kV permet de laisser passer ce qui est plus bas que 300 pb, et de retenir 300 pb et tout ce qui est plus haut que 300 pb.

Méthode:

Tampon TBE 0,5X + PVP 5%
Lavage : 6 bar, 15 min tampon
Injection 4 bar, 1,7 min (100 bp ladder, 100 ng/mL)
Concentration: 2 bar, 15 kV pendant 5min

Figure 25 : Séparation en appliquant le gradient de tension 2010

A T0, la pression est augmentée à 7 bars, en laissant le voltage à 15 kV pendant 1 minute, voltage utilisé pendant la phase de concentration.
De t=1 minute à t=2 minute, la tension appliquée décroit rapidement et linéairement de 15 kV à 5 kV.

De t=2 minute à t=3 minute, la tension appliquée décroit plus lentement et linéairement de 5 kV à 0,5 kV.

De t=3 minute à t=12 minute, la tension appliquée décroit encore plus lentement, de 0,5 kV à 0,2 kV.

Pour t>12 minute, tension constante de 0,2 kV.

En appliquant ce gradient de tension 2010, on obtient l'électrophérogramme 2015.

Figure 26 : Séparation en appliquant le gradient de champ électrique 2020, qui est identique à celui appliqué pour obtenir la courbe de la figure 25, si ce n'est que l'on a ajouté un palier 2020 à 5 kV de la minute 2 à la minute 7. En appliquant ce gradient de tension 2020, on obtient l'électrophérogramme 2025.

On voit clairement, en comparant les figures 25 et 26 :

- que le pic de 100 pb, qui sort avant la minute 2, n'est pas affecté par cette différence,
- que le pic de 200 pb est retardé, et sort pendant le palier à 5 kV et
- que les pics de 300 pb et plus haut sont retardés exactement du temps du palier.

Ils sont restés dans le concentrateur pendant les 7 premières minutes.

Est également décrit un kit pour mettre en oeuvre le système objet de la présente invention ou pour le fonctionnement du système objet de la présente invention, qui comporte le liquide viscoélastique.

Est également décrit un kit pour mettre en oeuvre le système objet de la présente invention ou pour le fonctionnement du système objet de la présente invention, qui comporte le dispositif de concentration, stacking et/ou de purification, ledit dispositif comportant une zone de concentration présentant, dans un sens d'écoulement, au moins un canal de sortie, chaque canal étant préférentiellement dimensionné de telle sorte que le cisaillement moyen dans ce canal est très supérieur, au moins double, au cisaillement moyen présent dans le canal d'arrivée dudit dispositif.

Ces kits objets de la présente invention peuvent être combinés en un seul kit. On note que l'un ou l'autre de ces kits objets de la présente invention peut comporter, de plus :

- d'autres réactifs, selon l'application visée par exemple un échantillon de contrôle pour vérifier le bon fonctionnement,
- un standard de poids moléculaire,
- un standard de masse,
- un loading buffer à ajouter dans l'échantillon.

## Revendications

1. Système (700) de traitement de molécules ou particules d'intérêt véhiculées par un liquide viscoélastique, système qui comporte :

   - un moyen (715) de mise en écoulement laminaire, pendant au moins une partie, dite « phase de concentration », de la durée de fonctionnement du système, du liquide viscoélastique dans un dispositif (705, 1100) de concentration, préconcentration par empilement d'échantillon et/ou de purification, ledit dispositif comportant une zone de concentration (110, 160, 210, 525, 1110) présentant, dans le sens dudit écoulement, une surface de section en entrée supérieure à la surface de section de chaque canal en sortie et
   - un moyen (725, 1108) d'application d'un champ électrique entre l'entrée et la sortie de la zone de concentration pendant la phase de concentration, l'action du champ électrique sur les molécules ou particules d'intérêt étant, dans la zone de concentration, opposée au sens dudit écoulement et provoquant la retenue de molécules ou particules d'intérêt au moins dans la zone de concentration, l'écoulement exerçant, du fait d'un cisaillement significatif à l'échelle des molécules ou particules d'intérêt et des propriétés viscoélastiques du fluide, une contre-réaction sur les molécules et particules d'intérêt, perpendiculaire à l'écoulement, qui repousse les molécules et particules d'intérêt vers les parois de la zone de concentration, de sorte que les molécules ou particules d'intérêt se concentrent dans la zone de concentration le long de lignes de cisaillement égaux,

   le système comportant, de plus, un moyen (730, 1108) de modulation configuré pour commander le moyen d'application du champ électrique pour appliquer, après la phase de concentration, un champ électrique d'intensité non nulle et inférieure à l'intensité du champ électrique appliqué pendant la phase de concentration, le moyen de modulation étant configuré pour commander le moyen d'application du champ électrique pour appliquer un champ électrique progressivement décroissant dans le temps après la phase de concentration, pour séparer les molécules concentrées au préalable.

2. Système (700) selon la revendication 1, dans lequel le moyen (730) de modulation est configuré pour commander le moyen d'application du champ électrique pour appliquer un champ électrique décroissant par paliers (1020) dans le temps.

3. Système (700) selon la revendication 1, dans lequel le moyen (730) de modulation est configuré pour commander le moyen d'application du champ électrique pour appliquer un champ électrique continuellement décroissant dans le temps.

4. Système selon l'un des revendications 1 à 3, dans lequel, la zone de concentration (110, 160, 210, 525) comporte un canal d'entrée et au moins un canal de sortie (135, 530), le cisaillement moyen présent dans chaque canal de sortie étant au moins le double du cisaillement moyen présent dans le canal d'entrée.

5. Système (700) selon l'une des revendications 1 à 4, qui comporte, de plus, un moyen (735) de modulation de la pression configuré pour appliquer, après la phase de concentration, une pression différente de la pression appliquée pendant la phase de concentration.

6. Système selon la revendication 5, dans lequel le moyen (735) de modulation de la pression est configuré pour appliquer, après la phase de concentration, une pression supérieure à la pression appliquée pendant la phase de concentration.

7. Système (700) selon l'une des revendications 1 à 6, dans lequel la zone de concentration comporte une multitude de lumières ou capillaires parallèles à l'axe central d'écoulement du fluide viscoélastique dans la zone de concentration.

8. Système (700) selon l'une des revendications 1 à 7, qui comporte une vanne (620) pour orienter le fluide viscoélastique sortant de la zone de concentration au choix dans deux directions, l'une des dites directions menant à un instrument et/ou un collecteur de fraction.

9. Système (770) selon l'une des revendications 1 à 8, dans lequel le dispositif (100, 400, 500, 705) de concentration, préconcentration par empilement d'échantillon et/ou de purification, comporte une zone de concentration (110, 525) présentant, dans le sens dudit écoulement, un canal d'arrivée (105) et une pluralité de canaux de sortie (135, 530).

10. Système selon la revendication 9, dans lequel les canaux de sortie (135, 530) sont dimensionnés de telle sorte que le cisaillement moyen dans les canaux de sortie est strictement supérieur au cisaillement moyen présent dans le canal d'arrivée (105) dudit dispositif.

11. Système selon la revendication 10, dans lequel le rapport de cisaillement moyen entre le canal d'arrivée (105) et chacun des canaux de sortie (135, 530) de la zone de concentration (110) est inférieur à 0,01.

12. Système selon l'une des revendications 9 à 11, qui comporte un multi-capillaire (135) présentant des canaux linéaires, la zone de concentration (110) se trouvant d'un côté de ce multi-capillaire.


**Patentansprüche**

1. System (700) zur Behandlung von Molekülen oder Partikeln von Interesse, die von einer viskoelastischen Flüssigkeit transportiert werden, wobei das System aufweist:

- ein Mittel (715) zum in Laminarströmungsversetzen, während mindestens eines Teils, bezeichnet als "Konzentrationsphase", der Betriebsdauer des Systems, der viskoelastischen Flüssigkeit in einer Vorrichtung (705, 1100) zur Konzentration, Vorkonzentration durch Probenstapelung und/oder Reinigung, wobei die Vorrichtung einen Konzentrationsbereich (110, 160, 210, 525, 1110) aufweist, der in Richtung des Strömens eine Querschnittsfläche am Eingang größer als die Querschnittsfläche jedes Ausgangskanals aufweist und
- ein Mittel (725, 1108) zur Anwendung eines elektrischen Feldes zwischen dem Eingang und dem Ausgang des Konzentrationsbereichs während der Konzentrationsphase, wobei die Wirkung des elektrischen Feldes auf die Moleküle oder Partikel von Interesse in dem Konzentrationsbereich der Richtung des Strömens entgegengesetzt ist und das Zurückhalten von Molekülen oder Partikeln von Interesse zumindest in dem Konzentrationsbereich bewirkt, wobei das Strömen aufgrund einer signifikanten Scherung auf der Ebene der Moleküle oder Partikel von Interesse und der viskoelastischen Eigenschaften des Fluids, eine Gegenreaktion auf die Moleküle und Partikel von Interesse senkrecht zum Strömen ausübt, die die Moleküle und Partikel von Interesse an die Wände des Konzentrationsbereichs verdrängt, so dass sich die Moleküle oder Partikel von Interesse im Konzentrationsbereich entlang gleicher Scherlinien konzentrieren,

wobei das System ferner ein Modulationsmittel (730, 1108) aufweist, das ausgelegt ist, um das Mittel zur Anwendung des elektrischen Feldes zu steuern, um nach der Konzentrationsphase ein elektrisches Feld mit einer Intensität von nicht Null anzuwenden, die geringer ist als die Intensität des während der Konzentrationsphase angewendeten elektrischen Feldes, wobei das Modulationsmittel ausgelegt ist, um das Mittel zur Anwendung des elektrischen Feldes zu steuern, um nach der Konzentrationsphase ein mit der Zeit nach und nach abnehmendes elektrisches Feld anzuwenden, um die zuvor konzentrierten Moleküle zu trennen.

2. System (700) nach Anspruch 1, wobei das Modulationsmittel (730) ausgelegt ist, um das Mittel zur Anwendung des elektrischen Feldes zu steuern, um ein im Laufe der Zeit stufenweise abnehmendes elektrisches Feld (1020) anzuwenden.

3. System (700) nach Anspruch 1, wobei das Modulationsmittel (730) ausgelegt ist, um das Mittel zur Anwendung des elektrischen Feldes zu steuern, um ein im Laufe der Zeit kontinuierlich abnehmendes elektrisches Feld anzuwenden.

4. System nach einem der Ansprüche 1 bis 3, wobei der Konzentrationsbereich (110, 160, 210, 525) einen Eingangskanal und wenigstens einen Ausgangskanal (135, 530) aufweist, wobei die in jedem Ausgangskanal vorhandene mittlere Scherung mindestens dem Doppelten der im Eingangskanal vorhandenen mittleren Scherung entspricht.

5. System (700) nach einem der Ansprüche 1 bis 4, das zusätzlich ein Druckmodulationsmittel (735) aufweist, das ausgelegt ist, um nach der Konzentrationsphase einen Druck anzuwenden, der sich von dem während der Konzentrationsphase angewendeten Druck unterscheidet.

6. System nach Anspruch 5, wobei das Druckmodulationsmittel (735) ausgelegt ist, um nach der Konzentrationsphase einen Druck anzuwenden, der höher ist als der während der Konzentrationsphase angewendete Druck.

7. System (700) nach einem der Ansprüche 1 bis 6, wobei der Konzentrationsbereich eine Vielzahl von Öffnungen oder Kapillaren parallel zur zentralen Strömungsachse des viskoelastischen Fluids im Konzentrationsbereich aufweist.

8. System (700) nach einem der Ansprüche 1 bis 7, das ein Ventil (620) aufweist, um das aus dem Konzentrationsbereich austretende viskoelastische Fluid wahlweise in zwei Richtungen zu leiten, wobei eine der Richtungen zu einem Instrument und/oder einem Fraktionskollektor führt.

9. System (770) nach einem der Ansprüche 1 bis 8, wobei die Vorrichtung (100, 400, 500, 705) zur Konzentration, Vorkonzentration durch Stapeln von Proben und/oder Reinigung einen Konzentrationsbereich (110, 525) aufweist, der in Strömungsrichtung einen Eingangskanal (105) und eine Vielzahl von Ausgangskanälen (135, 530) aufweist.

10. System nach Anspruch 9, wobei die Ausgangskanäle (135, 530) derart dimensioniert sind, dass die mittlere Scherung in den Ausgangskanälen strikt höher ist als die mittlere Scherung, die im Eingangskanal (105) der Vorrichtung vorhanden ist.

11. System nach Anspruch 10, wobei das mittlere Scherungsverhältnis zwischen dem Eingangskanal (105) und jedem der Ausgangskanäle (135, 530) des Konzentrationsbereichs (110) kleiner als 0,01 ist.

12. System nach einem der Ansprüche 9 bis 11, das eine Mehrfachkapillare (135) mit linearen Kanälen aufweist, wobei sich der Konzentrationsbereich (110) auf einer Seite dieser Mehrfachkapillare befindet.

**Claims**

1. System (700) for treating molecules or particles of interest carried by a viscoelastic liquid, which comprises:

   - a means (715) for establishing a laminar flow, during at least one portion, referred to as "concentration phase", of the operating time of the system, of the viscoelastic liquid in a concentration, pre-concentration by sample stacking and/or purification device (705, 1100), said device comprising a concentration area (110, 160, 210, 525, 1110) having, in the direction of said flow, an inlet cross-section surface that is larger than the cross-section surface of each outlet channel; and

- a means (725, 1108) for applying an electric field between the inlet and the outlet of the concentration area during the concentration phase, the action of the electric field on the molecules or particles of interest being, in the concentration area, opposite to the direction of said flow and causing the molecules or particles of interest to be retained at least in the concentration area, the flow exerting, because of the significant shear at the scale of the molecules or particles of interest and because of the viscoelastic properties of the fluid, a counter-reaction on the molecules and particles of interest, perpendicular to the flow, which pushes the molecules and particles of interest towards the walls of the concentration area, such that the molecules and particles of interest are concentrated in the concentration area along lines of equal shear,

the system also comprising a modulation means (730, 1108) configured to control the means for applying the electric field in order to apply, after the concentration phase, an electric field with intensity other than zero and lower than the intensity of the electric field applied during the concentration phase, the modulation means being configured to control the electric field application means to apply an electric field gradually decreasing over time after the concentration phase, for separating the molecules concentrated beforehand.

2. System (700) according to claim 1, wherein the modulation means (730) is configured to control the electric field application means to apply an electric field decreasing in steps (1020) over time.

3. System (700) according to claim 1, wherein the modulation means (730) is configured to control the electric field application means to apply an electric field decreasing continually over time.

4. System according to one of claims 1 to 3, wherein the concentration area (110, 160, 210, 525) comprises an inlet channel and at least one outlet channel (135, 530), the average shear present in each outlet channel being at least twice that of the average shear present in the inlet channel.

5. System (700) according to one of claims 1 to 4, which also comprises a pressure modulation means (735) configured to apply, after the concentration phase, a different pressure than the pressure applied during the concentration phase.

6. System according to claim 5, wherein the pressure modulation means (735) is configured to apply, after the concentration phase, a higher pressure than the pressure applied during the concentration phase.

7. System (700) according to one of claims 1 to 6, wherein the concentration area comprises a multitude of openings or capillaries parallel to the central axis of flow of the viscoelastic fluid in the concentration area.

8. System (700) according to one of claims 1 to 7, which comprises a valve (620) for orienting the viscoelastic fluid exiting from the concentration area to a choice of two directions, one of said directions leading to an instrument and/or a fraction collector.

9. System (770) according to one of claims 1 to 8, wherein the concentration, pre-concentration by sample stacking and/or purification device (100, 400, 500, 705) comprises a concentration area (110, 525) having, in the direction of said flow, an inlet channel (105) and a plurality of outlet channels (135, 530).

10. System according to claim 9, wherein the outlet channels (135, 530) are sized such that the average shear in the outlet channels is strictly greater than the average shear present in the inlet channel (105) of said device.

11. System according to claim 10, wherein the average shear ratio between the inlet channel (105) and each outlet channel (135, 530) of the concentration area (110) is less than 0.01.

12. System according to one of claims 9 to 11, which comprises a multicapillary (135) having linear channels, the concentration area (110) being on one side of this multicapillary.

100

105

140

115

120

F

E

130    110    135

125

Figure 1

100

105

140

115

120

F

110    135

125

Figure 2

400

405          410          420

415

Figure 3

500

530

520          525

Figure 4

Figure 5

Figure 8

## Figure 6

805 — 810

## Figure 7

Emmanchement de capillaires :

zone de concentration

Principe de plaque à trous :  Figure 9

zone de concentration

610          605          615

Figure 10

605

a)

Tube      Multicapillaires      Tube

3 cm

Figure 11

605

b)

Figure 12

c)

Début de concentration

Fin de concentration

concentrat

d)

Figure 13                    Figure 14

Figure 15

Figure 16A

Figure 16B

Figure 16C

Figure 16D

Figure 16E

Figure 17

1205  1210  1220  1215

Figure 18A

1205  1210  1245  1225  1215

Figure 18B

1205  1210  1245  1230  1215

Figure 18C

1205  1210  1245  1235  1215

Figure 18D

1205  1210  1245  1240  1215

Figure 18E

Figure 19

Figure 20

Figure 21

1505

1515

1510

Figure 22

1600

1605

1610

1615

1625

1620

1630

Figure 23

```
┌──────────────────────────────────────────────────┐   1950
│          Mise en écoulement laminaire            │
└──────────────────────────────────────────────────┘
                         │
                         ▼
┌──────────────────────────────────────────────────┐   1955
│  Application d'un champ électrique pendant la concentration │
└──────────────────────────────────────────────────┘
                         │
                         ▼
┌──────────────────────────────────────────────────┐   1960
│          Modulation du champ électrique          │
└──────────────────────────────────────────────────┘
```

Figure 24

Figure 25

Figure 26

## RÉFÉRENCES CITÉES DANS LA DESCRIPTION

**Documents brevets cités dans la description**

- US 20080087546 A
- US 20050034990 A
- FR 3024544
- US 2009071828 A1

- WO 2009005476 A1
- US 2008087546 A1
- FR 2994103

**Littérature non-brevet citée dans la description**

- **DEL GIUDICE et al.** *Lab Chip,* 2015, vol. 15, 783-792